(19) Europäisches Patentamt
European Patent Office
Office européen des brevets

(11) **EP 2 162 294 B1**

(12) **EUROPÄISCHE PATENTSCHRIFT**

(45) Veröffentlichungstag und Bekanntmachung des Hinweises auf die Patenterteilung:
**21.03.2012 Patentblatt 2012/12**

(21) Anmeldenummer: **08784548.3**

(22) Anmeldetag: **25.06.2008**

(51) Int Cl.:
***B42D 15/10*** *(2006.01)*  ***B42D 15/00*** *(2006.01)*

(86) Internationale Anmeldenummer:
**PCT/EP2008/005173**

(87) Internationale Veröffentlichungsnummer:
**WO 2009/000529 (31.12.2008 Gazette 2009/01)**

(54) **SICHERHEITSELEMENT**

SECURITY ELEMENT

ÉLÉMENT DE SÉCURITÉ

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **25.06.2007 DE 102007029203**

(43) Veröffentlichungstag der Anmeldung:
**17.03.2010 Patentblatt 2010/11**

(73) Patentinhaber: **Giesecke & Devrient GmbH**
**81677 München (DE)**

(72) Erfinder:
- **KAULE, Wittich**
  **82275 Emmering (DE)**
- **RAHM, Michael**
  **93155 Hemau (DE)**

(56) Entgegenhaltungen:
**WO-A-2005/052650  WO-A-2005/106601**
**WO-A-2007/030530  WO-A-2007/087984**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Sicherheitselement für Sicherheitspapiere, Wertdokumente und dergleichen, mit einer mikrooptischen Vergrößerungsanordnung vom Moirétyp zur Darstellung eines Moire-Bildes mit einem oder mehreren Moiré-Bildelementen.

Datenträger, wie Wert- oder Ausweisdokumente, aber auch andere Wertgegenstände, wie etwa Markenartikel, werden zur Absicherung oft mit Sicherheitselementen versehen, die eine Überprüfung der Echtheit des Datenträgers gestatten und die zugleich als Schutz vor unerlaubter Reproduktion dienen. Die Sicherheitselemente können beispielsweise in Form eines in eine Banknote eingebetteten Sicherheitsfadens, einer Abdeckfolie für eine Banknote mit Loch, eines aufgebrachten Sicherheitsstreifens oder eines selbsttragenden Transferelements ausgebildet sein, das nach seiner Herstellung auf ein Wertdokument aufgebracht wird.

Eine besondere Rolle spielen dabei Sicherheitselemente mit optisch variablen Elementen, die dem Betrachter unter unterschiedlichen Betrachtungswinkeln einen unterschiedlichen Bildeindruck vermitteln, da diese selbst mit hochwertigen Farbkopiergeräten nicht reproduziert werden können. Die Sicherheitselemente können dazu mit Sicherheitsmerkmalen in Form beugungsoptisch wirksamer Mikro- oder Nanostrukturen ausgestattet werden, wie etwa mit konventionellen Prägehologrammen oder anderen hologrammähnlichen Beugungsstrukturen, wie sie beispielsweise in den Druckschriften EP 0 330 733 A1 oder EP 0 064 067 A1 beschrieben sind.

Es ist auch bekannt, Linsensysteme als Sicherheitsmerkmale einzusetzen. So ist beispielsweise in der Druckschrift EP 0 238 043 A2 ein Sicherheitsfaden aus einem transparenten Material beschrieben, auf dessen Oberfläche ein Raster aus mehreren parallel laufenden Zylinderlinsen eingeprägt ist. Die Dicke des Sicherheitsfadens ist dabei so gewählt, dass sie in etwa der Fokuslänge der Zylinderlinsen entspricht. Auf der gegenüberliegenden Oberfläche ist ein Druckbild registergenau aufgebracht, wobei das Druckbild unter Berücksichtigung der optischen Eigenschaften der Zylinderlinsen gestaltet ist. Aufgrund der fokussierenden Wirkung der Zylinderlinsen und der Lage des Druckbilds in der Fokusebene sind je nach Betrachtungswinkel unterschiedliche Teilbereiche des Druckbilds sichtbar. Durch entsprechende Gestaltung des Druckbilds können damit Informationen eingebracht werden, die jedoch lediglich unter bestimmten Blickwinkeln sichtbar sind. Durch entsprechende Ausgestaltung des Druckbilds können zwar auch "bewegte" Bilder erzeugt werden. Das Motiv bewegt sich bei Drehung des Dokuments um eine zu den Zylinderlinsen parallel laufende Achse allerdings nur annähernd kontinuierlich von einem Ort auf dem Sicherheitsfaden zu einem anderen Ort.

Aus der Druckschrift US 5 712 731 A ist die Verwendung einer Moiré-Vergrößerungsanordnung als Sicherheitsmerkmal bekannt. Die dort beschriebene Sicherheitsvorrichtung weist eine regelmäßige Anordnung von im Wesentlichen identischen gedruckten Mikrobildern mit einer Größe bis zu 250 $\mu$m auf sowie eine regelmäßige zweidimensionale Anordnung von im Wesentlichen identischen sphärischen Mikrolinsen. Die Mikrolinsenanordnung weist dabei im Wesentlichen dieselbe Teilung wie die Mikrobildanordnung auf. Wird die Mikrobildanordnung durch die Mikrolinsenanordnung betrachtet, so werden in den Bereichen, in denen die beiden Anordnungen im Wesentlichen im Register stehen, für den Betrachter eine oder mehrere vergrößerte Versionen der Mikrobilder erzeugt.

Die prinzipielle Funktionsweise derartiger Moiré-Vergrößerungsanordnungen ist in dem Artikel "The moiré magnifier", M.C. Hutley, R. Hunt, R.F. Stevens and P. Savander, Pure Appl. Opt. 3 (1994), pp. 133-142, beschrieben. Kurz gesagt, bezeichnet Moiré-Vergrößerung danach ein Phänomen, das bei der Betrachtung eines Rasters aus identischen Bildobjekten durch ein Linsenraster mit annähernd demselben Rastermaß auftritt. Wie bei jedem Paar ähnlicher Raster ergibt sich dabei ein Moirémuster, das in diesem Fall als vergrößertes und gegebenenfalls gedrehtes Bild der wiederholten Elemente des Bildrasters erscheint.

Davon ausgehend liegt der Erfindung die Aufgabe zugrunde, die Nachteile des Standes der Technik zu vermeiden und insbesondere, ein Sicherheitselement mit einer mikrooptischen Vergrößerungsanordnung vom Moirétyp anzugeben, die einen großen Spielraum bei der Gestaltung der zu betrachtenden Motivbilder bietet.

Diese Aufgabe wird durch das Sicherheitselement mit den Merkmalen des Hauptanspruchs gelöst. Ein Verfahren zum Herstellen eines solchen Sicherheitselements, ein Sicherheitspapier sowie ein Datenträger mit einem solchen Sicherheitselement sind in den nebengeordneten Ansprüchen angegeben. Weiterbildungen der Erfindung sind Gegenstand der Unteransprüche.

Nach der Erfindung enthält ein gattungsgemäßes Sicherheitselement eine mikrooptische Vergrößerungsanordnung vom Moirétyp mit

- einem Motivbild, das eine periodische oder zumindest lokal periodische Anordnung einer Mehrzahl von Gitterzellen mit Mikromotivbildteilen enthält,

- einem zum Motivbild beabstandet angeordneten Fokussierelementraster zur Moiré-vergrößerten Betrachtung des Motivbilds, das eine periodische oder zumindest lokal periodische Anordnung einer Mehrzahl von Gitterzellen mit jeweils einem Mikrofokussierelement enthält,

wobei die Mikromotivbildteile mehrerer beabstandeter Gitterzellen des Motivbilds zusammengenommen jeweils ein Mikromotivelement bilden, das einem der Moiré-Bildelemente des vergrößerten Moiré-Bildes entspricht und dessen Ausdehnung größer als eine Gitterzelle des Motivbilds ist.

Im Rahmen dieser Anmeldung bezeichnet der Begriff "Moiré-Vergrößerungsanordnung" Ausgestaltungen, bei denen die Mikromotivelemente untereinander gleich sind, regelmäßig in Form eines Gitters angeordnet sind und mit ihrer Größe in eine Gitterzelle passen. Die Erzeugung eines Moire-Bildes aus einer Vielzahl regelmäßig angeordneter, identischer Mikromotivelemente erfolgt dabei nach dem oben beschriebenen Prinzip der Moire-Vergrößerung.

Der allgemeine Begriff "Vergrößerungsanordnung vom Moirétyp" bezeichnet im Rahmen dieser Anmeldung Ausgestaltungen, bei denen das darzustellende Mikromotivelement auch größer als eine Gitterzelle des Motivbilds sein kann. Der Begriff "Vergrößerungsanordnung vom Moirétyp" schließt daher die spezielleren Moiré-Vergrößerungsanordnungen mit ein. Die Wendung, dass die Ausdehnung des Mikromotivelements größer als eine Gitterzelle des Motivbilds ist, drückt dabei aus, dass das Mikromotivelement in seiner gewählten oder berechneten Orientierung nicht innerhalb einer Gitterzelle des Motivbilds, ebenfalls in der gewählten oder berechneten Orientierung betrachtet, Platz findet, so dass es bei einer periodischen Wiederholung des Mikromotivelements in den Gitterzellen im Allgemeinen zu Überlappungen benachbarter Mikromotivelemente kommt. Ein Mikromotivelement und ein Moiré-Bildelement entsprechen einander, wenn sie gerade durch die von der Vergrößerungsanordnung bewirkte Abbildung, die Vergrößerung, Drehung, Spiegelung und Scherung des Bildelements umfassen kann, ineinander übergehen. Diese Abbildung kann beispielsweise durch die weiter unten genauer beschriebenen Transformationsmatrix A der Vergrößerungsanordnung angegeben werden.

Während herkömmliche Gestaltungen auf Motivbilder mit Motivbildelementen beschränkt sind, die in eine Gitterzelle des Motivrasters passen, erlaubt die erfindungsgemäße Maßnahme, mit Vergrößerungsanordnungen vom Moirétyp auch Motivbildelemente, die größer als eine Gitterzelle sind, überlappungsfrei im Moiré-Bild darzustellen. Dies verschafft dem Designer einen wesentlich größeren Gestaltungsspielraum beim Entwurf von Moirémotiven, da er nicht mehr streng an die Form und Größe der Gitterzellen des Motivrasters gebunden ist. Darüber hinaus werden dadurch bei gegebener Gesamtdicke der Vergrößerungsanordnung besonders ausgedehnte Moire-Bildelemente erst ermöglicht.

Auf der anderen Seite können mithilfe der Aufteilung eines gegebenen Motivelements auf mehrere Gitterzellen insbesondere besonders dünne Vergrößerungsanordnungen hergestellt werden. Die Dicke einer Moiré-Vergrößerungsanordnung entspricht technisch bedingt nämlich in etwa der Rasterweite des verwendeten Motivrasters. Da bei herkömmlichen Gestaltungen die Motivelemente jeweils in eine Gitterzelle passen müssen, kann die Dicke der Moiré-Vergrößerungsanordnung nicht kleiner sein als die kleinstmöglich technisch realisierbare Motivgröße. Diese Hürde wird durch die erfindungsgemäße Aufteilung eines gegebenen Motivelements auf mehrere Gitterzellen überwunden.

Beispielsweise verlangt ein Motivelement der Abmessung a herkömmlich eine Gitterzelle zumindest der Größe a und bedingt damit aufgrund allgemeiner Erwägungen eine Dicke der Moiré-Vergrößerungsanordnung ebenfalls von der Größenordnung a, in einem konkreten Ausführungsbeispiel kann die Dicke beispielsweise minimal 1,5*a betragen. Dasselbe Motivelement kann erfindungsgemäß bei halbierter Rasterweite a/2 auf vier Gitterzellen verteilt werden, so dass die Dicke der Vergrößerungsanordnung vom Moirétyp auf einen Wert der Größenordnung a/2, im genannten Ausführungsbeispiel also auf eine Dicke von 1,5*a/2 reduziert werden kann. Bei einer Aufteilung auf eine größere Anzahl Gitterzellen kann die Dicke selbstverständlich noch stärker verringert werden.

In einer Erfindungsvariante sind dabei sowohl die Gitterzellen des Motivbilds als auch die Gitterzellen des Fokussierelementrasters periodisch angeordnet. Die Periodizitätslänge liegt dabei vorzugsweise zwischen 3 $\mu$m und 50 $\mu$m, bevorzugt zwischen 5 $\mu$m und 30 $\mu$m, besonders bevorzugt zwischen etwa 10 $\mu$m und etwa 20 $\mu$m.

Nach einer anderen Erfindungsvariante werden sowohl die Gitterzellen des Motivbilds als auch die Gitterzellen des Fokussierelementrasters lokal periodisch angeordnet, wobei sich die lokalen Periodenparameter im Verhältnis zur Periodizitätslänge nur langsam ändern. Beispielsweise können die lokalen Periodenparameter über die Ausdehnung des Sicherheitselements periodisch moduliert sein, wobei die Modulationsperiode vorzugsweise mindestens 20 mal, bevorzugt mindestens 50 mal, besonders bevorzugt mindestens 100 mal größer als die lokale Periodizitätslänge ist. Auch bei dieser Variante liegt die lokale Periodizitätslänge vorzugsweise zwischen 3 $\mu$m und 50 $\mu$m, bevorzugt zwischen 5 $\mu$m und 30 $\mu$m, besonders bevorzugt zwischen etwa 10 $\mu$m und etwa 20 $\mu$m.

Die Gitterzellen des Motivbilds und die Gitterzellen des Fokussierelementrasters bilden mit Vorteil zumindest lokal jeweils ein zweidimensionales Bravais-Gitter, vorzugsweise ein Bravais-Gitter mit niedriger Symmetrie, wie etwa ein Parallelogramm-Gitter. Die Verwendung von Bravais-Gittern mit niedriger Symmetrie bietet den Vorteil, dass sich Vergrößerungsanordnungen vom Moirétyp mit solchen Bravais-Gittern nur schwer nachahmen lassen, da für die Entstehung eines korrekten Bilds bei der Betrachtung die nur schwer analysierbare niedrige Symmetrie der Anordnung genau nachgestellt werden muss. Darüber hinaus schafft die niedrige Symmetrie einen großen Freiraum für unterschiedlich gewählte Gitterparameter, die somit als verborgene Kennzeichnung für erfindungsgemäß abgesicherte Produkte verwendet werden können, ohne dass dies für einen Betrachter am Moirevergrößerten Bild ohne Weiteres erkennbar wäre. Auf der anderen Seite können alle mit Moiré-Vergrößerungsanordnungen höherer Symmetrie realisierbaren attraktiven Effekte auch mit den bevorzugten niedrigsymmetrischen Vergrößerungsanordnungen vom Moirétyp verwirklicht werden.

Die lateralen Abmessungen der Gitterzellen des Motivbilds und der Gitterzellen des Fokussierelementrasters liegen bevorzugt unterhalb von etwa 100 $\mu$m, bevorzugt zwischen etwa 5 $\mu$m und etwa 50 $\mu$m, besonders bevorzugt zwischen etwa 10 $\mu$m und etwa 35 $\mu$m.

Die Mikrofokussierelemente sind vorzugsweise durch nichtzylindrische Mikrolinsen, insbesondere durch Mikrolinsen mit einer kreisförmigen oder polygonal begrenzten Basisfläche gebildet. In anderen Gestaltungen können die Mikrofokussierelemente auch durch lang gestreckte Zylinderlinsen gebildet sein, deren Ausdehnung in Längsrichtung mehr als 250 $\mu$m, bevorzugt mehr als 300 $\mu$m, besonders bevorzugt mehr als 500 $\mu$m und insbesondere mehr als 1 mm beträgt.

In weiteren bevorzugten Gestaltungen sind die Mikrofokussierelemente durch Lochblenden, Schlitzblenden, mit Spiegeln versehene Loch- oder Schlitzblenden, asphärische Linsen, Fresnellinsen, GRIN-Linsen (Gradient Refraction Index), Zonenplatten, holographische Linsen, Hohlspiegel, Fresnelspiegel, Zonenspiegel oder andere Elemente mit fokussierender oder auch ausblendender Wirkung gebildet.

Die Gesamtdicke des Sicherheitselements liegt mit Vorteil unterhalb von 50 $\mu$m, bevorzugt unterhalb von 30 $\mu$m und besonders bevorzugt unterhalb von 20 $\mu$m. Durch die erfindungsgemäße Aufteilung sind sogar noch dünnere Gestaltungen mit einer Gesamtdicke von etwa 10 $\mu$m oder weniger, oder sogar mit einer Gesamtdicke von etwa 5 $\mu$m oder weniger möglich.

Die Mikromotivbildteile bilden bevorzugt Mikromotivelemente in Form von Mikrozeichen oder Mikromustern und können insbesondere in einer geprägten oder gedruckten Schicht vorliegen.

In einem zweiten Aspekt enthält die Erfindung ein gattungsgemäßes Sicherheitselement mit einer mikrooptischen Vergrößerungsanordnung vom Moirétyp zur Darstellung eines Moiré-Bildes mit mehreren Moire-Bildelementen, mit

- einem Motivbild, das eine periodische oder zumindest lokal periodische Anordnung einer Mehrzahl von Gitterzellen mit Mikromotivelementen enthält, wobei jedes Mikromotivelement einem der Moire-Bildelemente entspricht,

- einem zum Motivbild beabstandet angeordneten Fokussierelementraster zur Moiré-vergrößerten Betrachtung des Motivbilds, das eine periodische oder zumindest lokal periodische Anordnung einer Mehrzahl von Gitterzellen mit jeweils einem Mikrofokussierelement enthält,

wobei das Motivbild in Flächenbereiche unterteilt ist, die jeweils einem der Moiré-Bildelemente zugeordnet sind und in Position und Größe dem zugeordneten Moiré-Bildelement entsprechen, und wobei die einem Moire-Bildelement entsprechenden Mikromotivelemente jeweils in dem Flächenbereich des Motivbilds wiederholt angeordnet sind, der diesem Moiré-Bildelement zugeordnet ist.

Nach einer vorteilhaften Weiterbildung der Erfindung weist das Sicherheitselement in beiden Aspekten eine opake Abdeckschicht zur bereichsweisen Abdeckung der Vergrößerungsanordnung vom Moirétyp auf. Innerhalb des abgedeckten Bereichs tritt somit kein Moire-Vergrößerungseffekt auf, so dass der optisch variable Effekt mit herkömmlichen Informationen oder mit anderen Effekten kombiniert werden kann. Diese Abdeckschicht liegt mit Vorteil in Form von Mustern, Zeichen oder Codierungen vor und/oder weist Aussparungen in Form von Mustern, Zeichen oder Codierungen auf.

In allen genannten Erfindungsvarianten sind das Motivbild und das Fokussierelementraster vorzugsweise an gegenüberliegenden Flächen einer optischen Abstandsschicht angeordnet. Die Abstandsschicht kann beispielsweise eine Kunststofffolie und/ oder eine Lackschicht umfassen.

Die Anordnung von Mikrofokussierelementen kann darüber hinaus mit einer Schutzschicht versehen sein, deren Brechungsindex vorzugsweise um mindestens 0,3 von dem Brechungsindex der Mikrofokussierelemente abweicht, falls lichtbrechende Linsen als Mikrofokussierelemente dienen. In diesem Fall ändert sich durch die Schutzschicht die Brennweite der Linsen, was bei der Dimensionierung der Linsen-Krümmungsradien und/oder der Dicke der Abstandsschicht berücksichtigt werden muss. Neben dem Schutz vor Umwelteinflüssen verhindert eine derartige Schutzschicht auch, dass sich die Mikrofokussierelement-Anordnung zu Fälschungszwecken leicht abformen lässt.

Das Sicherheitselement selbst stellt in allen Erfindungsaspekten bevorzugt einen Sicherheitsfaden, einen Aufreißfaden, ein Sicherheitsband, einen Sicherheitsstreifen, einen Patch oder ein Etikett zum Aufbringen auf ein Sicherheitspapier, Wertdokument oder dergleichen dar. In einer vorteilhaften Ausgestaltung kann das Sicherheitselement einen transparenten oder ausgesparten Bereich eines Datenträgers überspannen. Dabei können auf unterschiedlichen Seiten des Datenträgers unterschiedliche Erscheinungsbilder realisiert werden.

Die Erfindung enthält auch ein Verfahren zum Herstellen eines Sicherheitselements mit einer mikrooptischen Vergrößerungsanordnung vom Moiretyp zur Darstellung eines Moiré-Bildes mit einem oder mehreren Moire-Bildelementen, bei dem

- in einer Motivebene ein Motivbild mit einer periodischen oder zumindest lokal periodischen Anordnung einer Mehrzahl von Gitterzellen mit Mikromotivbildteilen erzeugt wird,

- ein Fokussierelementraster zur Moiré-vergrößerten Betrachtung des Motivbilds mit einer periodischen oder zumindest lokal periodischen Anordnung einer Mehrzahl von Gitterzellen mit jeweils einem Mikrofokussierelement erzeugt und zum Motivbild beabstandet angeordnet wird,

wobei die Mikromotivbildteile so ausgebildet werden, dass die Mikromotivbildteile mehrerer beabstandeter Gitterzellen des Motivbilds zusammengenommen jeweils ein Mikromotivelement bilden, das einem der Moire-Bildelemente des vergrößerten Moiré-Bildes entspricht und dessen Ausdehnung größer als eine Gitterzelle des Motivbilds ist.

Um solche gleichartigen Motiv-Teilmengen und die zugeordneten Fokussierelement-Teilmengen des Fokussierelementrasters zu bestimmen, ist in einer bevorzugten Weiterbildung des Verfahrens vorgesehen, dass

a) ein gewünschtes, bei Betrachtung zu sehendes Moiré-Bild mit einem oder mehreren Moiré-Bildelementen als Sollmotiv festgelegt wird,

b) eine periodische oder zumindest lokal periodische Anordnung von Mikrofokussierelementen als Fokussierelementraster festgelegt wird,

c) eine gewünschte Vergrößerung und eine gewünschte Bewegung des zu sehenden Moiré-Bilds beim seitlichen Kippen und beim vor-/rückwärtigen Kippen der Vergrößerungsanordnung festgelegt wird,

d) aus dem festgelegten Vergrößerungs- und Bewegungsverhalten, dem Fokussierelementraster und dem Sollmotiv das in die Motivebene einzubringende Mikromotivelement und das Motivraster berechnet wird,

e) geprüft wird, ob eine mit der Symmetrie des Motivrasters wiederholte Anordnung der Mikromotivelemente zu Überlappung führt, und falls dies der Fall ist,

f) gleichartige Motiv-Teilmengen der in Schritt e) erzeugten Mikromotivelement-Anordnung ermittelt werden, in denen die Mikromotivelemente überlappungsfrei wiederholt angeordnet sind,

g) gleichartige, den Motiv-Teilmengen entsprechende Fokussierelement-Teilmengen des Fokussierelementrasters bestimmt und der jeweiligen Motiv-Teilmenge zugeordnet werden,

h) für jede Fokussierelement-Teilmenge der Schnitt des entsprechenden Fokussierelement-Teilrasters mit der zugehörigen Motiv-Teilmenge bestimmt wird, und

i) die entstehenden Schnitte entsprechend der relativen Position der Fokussierelement-Teilmenge im Fokussierelementraster zu dem in der Motivebene anzuordnenden Motivbild zusammengesetzt werden.

Wichtig ist dabei, dass die in Schritt f) ermittelten Motiv-Teilmengen nicht nur eine überlappungsfreie Darstellung der Mikromotivelemente aufweisen, sondern dass die ermittelten Motiv-Teilmengen auch zusammen mit den entsprechenden Fokussierelement-Teilmengen des Fokussierelementrasters jeweils Vergrößerungsanordnungen vom Moirétyp bilden, die zum gleichen Sollmotiv führen. Dies ist durch die Wendung ausgedrückt, dass die in Schritt f) ermittelten Motiv-Teilmengen alle "gleichartig" sein sollen.

In einer weiteren vorteilhaften Weiterbildung des Verfahrens ist vorgesehen, dass

a) ein gewünschtes, bei Betrachtung zu sehendes Moiré-Bild mit einem oder mehreren Moiré-Bildelementen als Sollmotiv festgelegt wird,

b) eine periodische oder zumindest lokal periodische Anordnung von Mikrofokussierelementen als Fokussierelementraster festgelegt wird,

c) eine gewünschte Vergrößerung und eine gewünschte Bewegung des zu sehenden Moire-Bilds beim seitlichen Kippen und beim vor-/rückwärtigen Kippen der Vergrößerungsanordnung festgelegt wird,

d) aus dem festgelegten Vergrößerung- und Bewegungsverhalten, dem Fokussierelementraster und dem Sollmotiv das in die Motivebene einzubringende Mikromotivelement und das Motivraster berechnet wird,

e) geprüft wird, ob eine mit der Symmetrie des Motivrasters wiederholte Anordnung der Mikromotivelemente zu Überlappung führt, und falls dies der Fall ist,

f') ein Übergitterraster des Motivrasters ermittelt wird, in dem die Mikromotivelemente überlappungsfrei wiederholt angeordnet werden können,

g') ein dem Motiv-Übergitterraster entsprechendes Übergitterraster des Fokussierelementrasters bestimmt wird und das Fokussierelementraster in Teilraster mit der Symmetrie des Fokussierelement-Übergitterrasters zerlegt wird,

h') für jedes Fokussierelement-Teilraster der Schnitt des Teilrasters mit einer überlappungsfreien Anordnung der Mikromotivelemente bestimmt wird, und

i') die entstehenden Schnitte entsprechend der relativen Position des jeweiligen Teilrasters im Fokussierelement-Übergitterraster zu dem in der Motivebene anzuordnenden Motivbild zusammengesetzt werden.

Unter einem Übergitterraster wird dabei ein Raster verstanden, dessen Einheitszelle mehrere Gitterzellen des zugrunde liegenden Grundrasters enthält. Beispielsweise kann die Einheitszelle eines einfachen Übergitterraster 2 x 2, 2 x 3 oder 3 x 2 Gitterzellen des Grundrasters umfassen.
Vorzugsweise wird bei diesem Verfahren nach Schritt g') in einem Schritt

g") für jedes Fokussierelement-Teilraster das entsprechende Motiv-Teilraster ermittelt und der auf die Motiv-Übergitterzelle bezogene Versatz dieses Motiv-Teilrasters bestimmt, und wird in Schritt

h') für jedes Fokussierelement-Teilraster die in Schritt f') ermittelte überlappungsfreie Anordnung der Mikromotivelemente um den in Schritt g") bestimmten Versatz des zugehörigen Motiv-Teilrasters verschoben und der Schnitt des Fokussierelement-Teilrasters mit der verschobenen überlappungsfreien Anordnung der Mikromotivelemente bestimmt.

Das Fokussierelementraster wird in Schritt b) zweckmäßig in Form eines zweidimensionalen Bravais-Gitters festgelegt, dessen Gitterzellen durch Vektoren $\vec{w}_1$ und $\vec{w}_2$ gegeben sind. Das gewünschte Vergrößerungs- und Bewegungsverhalten wird in Schritt c) vorteilhaft in Form der Matrixelemente einer Transformationsmatrix $\vec{A}$ vorgegeben. Das in die Motivebene einzubringende Mikromotivelement und das Motivraster werden in Schritt d) dann vorteilhaft unter Verwendung der Beziehungen

$$\vec{U} = (\bar{I} - \bar{A}^{-1}) \cdot \vec{W}$$

und

$$\vec{r} = \bar{A}^{-1} \cdot \vec{R} + \vec{r}_0$$

berechnet, wobei $\vec{R} = \begin{pmatrix} X \\ Y \end{pmatrix}$ einen Bildpunkt des gewünschten Moiré-Bilds, $\vec{r} = \begin{pmatrix} x \\ y \end{pmatrix}$ einen Bildpunkt des Motivbilds,

$\vec{r}_0 = \begin{pmatrix} x_0 \\ y_0 \end{pmatrix}$ eine Verschiebung zwischen dem Fokussierelementraster und dem Motivbild darstellt, und die Matrizen

$\vec{A}$, $\vec{W}$ und die Motivgittermatrix $\vec{U}$ durch $\bar{A} = \begin{pmatrix} a_{11} & a_{12} \\ a_{21} & a_{22} \end{pmatrix}$, $\vec{W} = \begin{pmatrix} w_{11} & w_{12} \\ w_{21} & w_{22} \end{pmatrix}$ bzw. $\vec{U} = \begin{pmatrix} u_{11} & u_{12} \\ u_{21} & u_{22} \end{pmatrix}$ gegeben

sind, wobei $u_{1i}$, $u_{2i}$ bzw. $w_{1i}$, $w_{2i}$ die Komponenten der Gitterzellenvektoren $\vec{u}_i$ und $\vec{w}_i$, mit i=1,2 darstellen.
In Schritt f') wird bevorzugt ein Motiv-Übergitterraster ausgewählt, das aus n x m Gitterzellen des Motivrasters besteht, wobei für n und m vorzugsweise die kleinsten Werte gewählt werden, die eine überlappungsfreie Anordnung der Mikromotivelemente erlauben. Das Fokussierelementraster wird in Schritt g') vorzugsweise in n x m Teilraster zerlegt.

Vorteilhaft wird das Motivraster in Schritt g") in n x m Motiv-Teilraster zerlegt und für jedes Motiv-Teilraster wird der auf die Motiv-Übergitterzelle bezogene Versatz $\vec{v_j}$ mit j =1, ... n*m, des Motiv-Teilrasters bestimmt.

Weiter wird mit Vorteil in Schritt h') für jedes Fokussierelement-Teilraster die in Schritt f') ermittelte überlappungsfreie Anordnung der Mikromotivelemente um den Versatz $\vec{v_j}$ des zugehörigen Motiv-Teilrasters verschoben und der Schnitt des Fokussierelement-Teilrasters mit der verschobenen überlappungsfreien Anordnung der Mikromotivelemente bestimmt.

Gemäß dem zweiten Erfindungsaspekt enthält die Erfindung auch ein Verfahren zum Herstellen eines Sicherheitselements mit einer mikrooptischen Vergrößerungsanordnung vom Moiretyp zur Darstellung eines Moire-Bildes mit mehreren MoireBildelementen, bei dem

- ein Motivbild mit einer periodischen oder zumindest lokal periodischen Anordnung einer Mehrzahl von Gitterzellen mit Mikromotivelementen erzeugt wird, wobei jedes Mikromotivelement einem der Moiré-Bildelemente entspricht,

- ein Fokussierelementraster zur Moiré-vergrößerten Betrachtung des Motivbilds mit einer periodischen oder zumindest lokal periodischen Anordnung einer Mehrzahl von Gitterzellen mit jeweils einem Mikrofokussierelement erzeugt und zum Motivbild beabstandet angeordnet wird,

wobei das Motivbild in Flächenbereiche unterteilt wird, die jeweils einem der Moire-Bildelemente zugeordnet sind und in Position und Größe dem zugeordneten Moiré-Bildelement entsprechen, und wobei die einem Moiré-Bildelement entsprechenden Mikromotivelemente jeweils in dem Flächenbereich des Motivbilds wiederholt angeordnet werden, der diesem Moire-Bildelement zugeordnet ist.

Bei beiden Erfindungsaspekten können die Gitterparameter der Bravais-Gitter ortsunabhängig sein. Es ist jedoch ebenfalls möglich, die Gittervektoren von Motivraster und Fokussierelementraster, $\vec{u_1}$ und $\vec{u_2}$, bzw. $\vec{w_1}$ und $\vec{w_2}$ ortsabhängig zu modulieren, wobei sich die lokalen Periodenparameter $|\vec{u_1}|, |\vec{u_2}|, \angle(\vec{u_1}, \vec{u_2})$ bzw. $|\vec{w_1}|, |\vec{w_2}|, \angle(\vec{w_1}, \vec{w_2})$ im Verhältnis zur Periodizitätslänge erfindungsgemäß nur langsam ändern. Dadurch ist sichergestellt, dass die Anordnungen lokal stets sinnvoll durch Bravais-Gitter beschrieben werden können.

Ein Sicherheitspapier für die Herstellung von Sicherheits- oder Wertdokumenten, wie Banknoten, Schecks, Ausweiskarten, Urkunden oder dergleichen, ist vorzugsweise mit einem Sicherheitselement der oben beschriebenen Art ausgestattet. Das Sicherheitspapier kann insbesondere ein Trägersubstrat aus Papier oder Kunststoff umfassen.

Die Erfindung enthält auch einen Datenträger, insbesondere einen Markenartikel, ein Wertdokument, einen dekorativen Artikel, wie eine Verpackung, Postkarten oder dergleichen, mit einem Sicherheitselement der oben beschriebenen Art. Das Sicherheitselement kann dabei insbesondere in einem Fensterbereich, also einem transparenten oder ausgesparten Bereich des Datenträgers angeordnet sein.

Weitere Ausführungsbeispiele sowie Vorteile der Erfindung werden nachfolgend anhand der Figuren erläutert. Zur besseren Anschaulichkeit wird in den Figuren auf eine maßstabs- und proportionsgetreue Darstellung verzichtet.

Es zeigen:

Fig. 1     eine schematische Darstellung einer Banknote mit einem eingebetteten Sicherheitsfaden und einem aufgeklebten Transferelement,

Fig. 2     schematisch den Schichtaufbau eines erfindungsgemäßen Sicherheitselements im Querschnitt,

Fig. 3     schematisch die Verhältnisse bei der Betrachtung einer Vergrößerungsanordnung vom Moirétyp zur Definition der auftretenden Größen,

Fig. 4     in (a) ein vorgegebenes Sollmotiv in Form des Buchstabens "P", und in (b) ein vorgegebenes Linsenarray mit quadratischem Linsenraster,

Fig. 5     in (a) das berechnete, wiederholt in das Motivraster einzubringende Mikromotivelement, das Motivraster und einen Teil des Linsenrasters, und in (b) die in herkömmlicher Weise wiederholt angeordneten, überlappenden Mikromotivelemente,

Fig. 6     in (a) ein Motiv-Übergitterraster, dessen Gitterzellen jeweils aus 2 x 2 Gitterzellen des gestrichelt eingezeichneten Motivras- ters bestehen sowie eine mit der Periodizitätslänge des Übergitterrasters wiederholte, nicht überlappende Anordnung der Mikromotivelemente, und in (b) das Motiv-Übergitterraster, das gestrichelt eingezeichnete Motivraster und vier gleichartige, jeweils nicht überlappende Motiv-Teilmengen im Detail,

Fig. 7    in (a) die nicht überlappende Anordnung der Mikromotivelemente der Fig. 6(a) zusammen mit einem dem Motiv-Übergitterraster entsprechenden Linsen-Übergitterraster, und in (b) das Linsen-Übergitterraster und das gestrichelt eingezeichnete Linsenraster im Detail,

Fig. 8    in (a) bis (d) jeweils eine nicht überlappende Anordnung der Mikromotivelemente (grau), ein Teilraster des Linsenrasters sowie die beim Schnitt dieses Teilrasters mit der Motivelement-Anordnung ausgeschnittenen Motivbildteile (schwarz), in (e) die zu einem Motivbild zusammengesetzten Schnittbilder aus den Schritten (a) bis (d), und in (f) das bei der Betrachtung des Motivbilds (e) mit dem Linsenarray der Fig. 4(b) entstehende vergrößerte Moiré-Bild,

Fig. 9    für ein weiteres Ausführungsbeispiel eine nicht überlappende Anordnung von Mikromotivelementen innerhalb eines Motiv-Übergitters, das aus 2 x 2 Gitterzellen besteht,

Fig.10    ein Teilraster des Linsenrasters mit der Symmetrie eines dem Motiv-Übergitterraster der Fig. 9 entsprechenden Linsen-Übergitterrasters,

Fig. 11   das fertige Motivbild, zusammengesetzt aus den vier Schnittbildern der vier Linsen-Teilraster mit geeignet verschobenen überlappungsfreien Anordnungen der Mikromotivelemente,

Fig. 12   das bei Betrachtung des Motivbilds der Fig. 11 mit dem Linsenarray der Fig. 4(b) entstehende vergrößerte Moiré-Bild,

Fig.13    in (a) eine aus Motiven "A", "B", "C" zusammengesetzte Motivschicht, die mit dem passenden Linsenraster kombiniert das in (b) gezeigte vergrößerte Moiré-Bild ergibt,

Fig. 14   eine Darstellung wie Fig. 13 für ein Ausführungsbeispiel, bei dem sich die Buchstabenmotive "A", "B", "C" beim Kippen der Vergrößerungsanordnung vom Moirétyp in unterschiedliche Richtungen bewegen, und

Fig. 15   ein Ausführungsbeispiel mit einem langen Motivelement "B", wobei (a) das verzerrte Motivelement zusammen mit dem Linsenraster zeigt, (b) das Motivbild und (c) das entstehende Moiré-Bild bei herkömmlichem Vorgehen zeigt, und (d) und (e) das Motivbild bzw. das Moiré-Bild bei erfindungsgemäßem Vorgehen zeigen.

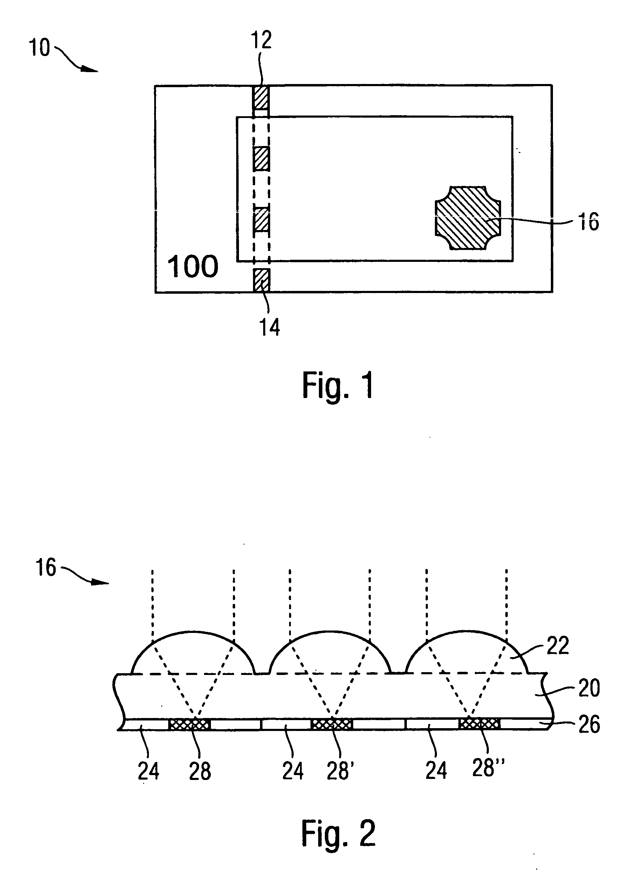

Die Erfindung wird nun am Beispiel eines Sicherheitselements für eine Banknote erläutert. Fig. 1 zeigt dazu eine schematische Darstellung einer Banknote 10, die mit zwei Sicherheitselementen 12 und 16 nach Ausführungsbeispielen der Erfindung versehen ist. Das erste Sicherheitselement stellt einen Sicherheitsfaden 12 dar, der in bestimmten Fensterbereichen 14 an der Oberfläche der Banknote 10 hervortritt, während er in den dazwischen liegenden Bereichen im Inneren der Banknote 10 eingebettet ist. Das zweite Sicherheitselement ist durch ein aufgeklebtes Transferelement 16 beliebiger Form gebildet. Das Sicherheitselement 16 kann auch in Form einer Abdeckfolie ausgebildet sein, die über einem Fensterbereich oder einer durchgehenden Öffnung der Banknote angeordnet ist. Das Sicherheitselement kann für Betrachtung in Aufsicht, Durchsicht oder für Betrachtung sowohl in Aufsicht als auch in Durchsicht ausgelegt sein. Auch beidseitige Gestaltungen kommen infrage, bei denen beiderseits eines Motivbilds Linsenraster angeordnet sind.

Sowohl der Sicherheitsfaden 12 als auch das Transferelement 16 können eine Vergrößerungsanordnung vom Moirétyp nach einem Ausführungsbeispiel der Erfindung enthalten. Die Funktionsweise und das erfindungsgemäße Herstellungsverfahren für derartige Anordnungen werden im Folgenden anhand des Transferelements 16 näher beschrieben.

Fig. 2 zeigt schematisch den Schichtaufbau des Transferelements 16 im Querschnitt, wobei nur die für die Erläuterung des Funktionsprinzips erforderlichen Teile des Schichtaufbaus dargestellt sind. Das Transferelement 16 enthält einen Träger 20 in Form einer transparenten Kunststofffolie, im Ausführungsbeispiel einer etwa 20 $\mu$m dicken Polyethylenterephthalat(PET)-Folie.

Die Oberseite der Trägerfolie 20 ist mit einer rasterförmigen Anordnung von Mikrolinsen 22 versehen, die auf der Oberfläche der Trägerfolie ein zweidimensionales Bravais-Gitter mit einer vorgewählten Symmetrie bilden. Das Bravais-Gitter kann beispielsweise eine hexagonale Gittersymmetrie aufweisen, bevorzugt sind wegen der höheren Fälschungssicherheit jedoch niedrigere Symmetrien und damit allgemeinere Formen, insbesondere die Symmetrie eines Parallelogramm-Gitters.

Der Abstand benachbarter Mikrolinsen 22 ist vorzugsweise so gering wie möglich gewählt, um eine möglichst hohe Flächendeckung und damit eine kontrastreiche Darstellung zu gewährleisten. Die sphärisch oder asphärisch ausgestalteten Mikrolinsen 22 weisen vorzugsweise einen Durchmesser zwischen 5 $\mu$m und 50 $\mu$m und insbesondere einen Durchmesser zwischen lediglich 10 $\mu$m und 35 $\mu$m auf und sind daher mit bloßem Auge nicht zu erkennen. Es versteht sich, dass bei anderen Gestaltungen auch größere oder kleinere Abmessungen infrage kommen. Beispielsweise können die Mikrolinsen bei Moiré-Magnifier-Strukturen für Dekorationszwecke einen Durchmesser zwischen 50 μm und 5 mm aufweisen, während bei Moire-Magnifier-Strukturen, die nur mit einer Lupe oder einem Mikroskop entschlüsselbar sein sollen, auch Abmessungen unterhalb von 5 μm zum Einsatz kommen können.

Auf der Unterseite der Trägerfolie 20 ist eine Motivschicht 26 angeordnet, die eine ebenfalls rasterförmige Anordnung einer Mehrzahl von Gitterzellen 24 mit verschiedenen Mikromotivbildteilen 28, 28', 28'' enthält. Wie nachfolgend genauer erläutert, bilden die Mikromotivbildteile mehrerer beabstandeter Gitterzellen 24 der Motivschicht 26 zusammengenommen jeweils ein Mikromotivelement, das einem der Moiré-Bildelemente des vergrößerten Moire-Bildes entspricht und dessen Ausdehnung größer als eine Gitterzelle 24 ist.

Die Anordnung der Gitterzellen 24 bildet ebenfalls ein zweidimensionales Bravais-Gitter mit einer vorgewählten Symmetrie, wobei zur Illustration wieder ein Parallelogramm-Gitter angenommen ist. Wie in Fig. 2 durch den Versatz der Gitterzellen 24 gegenüber den Mikrolinsen 22 angedeutet, unterscheidet sich das Bravais-Gitter der Gitterzellen 24 in seiner Symmetrie und/oder in der Größe seiner Gitterparameter geringfügig von dem Bravais-Gitter der Mikrolinsen 22, um den gewünschten Moiré-Vergrößerungseffekt zu erzeugen. Die Gitterperiode und der Durchmesser der Gitterzellen 24 liegen dabei in derselben Größenordnung wie die der Mikrolinsen 22, also vorzugsweise im Bereich von 5 μm bis 50 μm und insbesondere im Bereich von 10 μm bis 35 μm, so dass auch die Mikromotivbildteile 28, 28', 28'' selbst mit bloßem Auge nicht zu erkennen sind. Bei Gestaltungen mit den oben erwähnten größeren oder kleineren Mikrolinsen sind selbstverständlich auch die Gitterzellen 24 entsprechend größer oder kleiner ausgebildet.

Die optische Dicke der Trägerfolie 20 und die Brennweite der Mikrolinsen 22 sind so aufeinander abgestimmt, dass sich die Motivschicht 26 etwa im Abstand der Linsenbrennweite befindet. Die Trägerfolie 20 bildet somit eine optische Abstandsschicht, die einen gewünschten, konstanten Abstand der Mikrolinsen 22 und der Motivschicht mit den Mikromotivbildteilen 28, 28', 28'' gewährleistet.

Aufgrund der sich geringfügig unterscheidenden Gitterparameter sieht der Betrachter bei Betrachtung von oben durch die Mikrolinsen 22 hindurch jeweils einen etwas anderen Teilbereich der Mikromotivbildteile 28, 28', 28'', so dass die Vielzahl der Mikrolinsen 22 insgesamt ein vergrößertes Bild der aus den Mikromotivbildteilen gebildeten Mikromotivelemente erzeugt. Die sich ergebende Moiré-Vergrößerung hängt dabei von dem relativen Unterschied der Gitterparameter der verwendeten Bravais-Gitter ab. Unterscheiden sich beispielsweise die Gitterperioden zweier hexagonaler Gitter um 1 %, so ergibt sich eine 100-fache Moiré-Vergrößerung. Für eine ausführlichere Darstellung der Funktionsweise und für vorteilhafte Anordnungen der Motivraster und der Mikrolinsenraster wird auf die deutsche Patentanmeldung 10 2005 062132.5 und die internationale Anmeldung PCT/EP2006/012374 verwiesen, deren Offenbarungsgehalt insoweit in die vorliegende Anmeldung aufgenommen wird.

Die Besonderheit der vorliegenden Erfindung besteht nun darin, dass die Mikromotivelemente der Motivschicht 26, die den Moire-Bildelementen des vergrößerten Moire-Bildes entsprechen, größer als die Ausdehnung einer Gitterzelle 24 der Motivschicht 26 sind und daher aufgrund der auftretenden Überlappungen nicht einfach periodisch wiederholt in der Motivschicht angeordnet werden können. Vielmehr werden die Mikromotivelemente erfindungsgemäß in geeigneter Weise in Mikromotivbildteile zerlegt, die jeweils innerhalb einer von mehreren beabstandeten Gitterzellen 24 untergebracht werden und die zusammengenommen das jeweilige Mikromotivelement bilden. Die Aufteilung eines Mikromotivelements in Mikromotivbildteile und die Verteilung der Bildteile auf Gitterzellen muss dabei nach bestimmten Regeln erfolgen, wenn die Bildteile für den Betrachter korrekt und lückenlos zu einem kontrastreichen, vergrößerten Moiré-Bildelement zusammengesetzt werden sollen.

Mit der beschriebenen erfindungsgemäßen Aufteilung größerer Motive können insbesondere besonders dünne Moiré-Magnifier hergestellt werden: Die Dicke einer Moiré-Magnifier-Anordnung ist technisch bedingt ungefähr gleich der Rasterweite des Motivrasters. Da nach dem Stand der Technik die Motive jeweils in eine Motiv-Gitterzelle passen müssen, lässt sich die Dicke herkömmlich nicht kleiner als die kleinstmöglich technisch realisierbare Motivgröße machen. Diese Hürde wird erfindungsgemäß überwunden, indem sich das Motiv über mehrere Gitterzellen erstreckt.

Beispielsweise gibt es im Stand der Technik ein Verfahren, gerade noch 10 μm große, für Moiré-Magnifier geeignete Motive zu erzeugen, für kleinere Motive reicht die Auflösung des Verfahrens nicht aus. Ein solches 10μm-Motiv passt gerade in ein 10μm-Raster, so dass man herkömmlich mit diesem Verfahren keine Moiré-Magnifier herstellen kann, die dünner als 10 μm sind. Erfindungsgemäß kann man jedoch ein 10μm-Motiv in vier Gitterzellen eines 5μm-Rasters aufgeteilt unterbringen und damit einen 5μm dünnen Moiré-Magnifier herstellen. Natürlich kann man das 10μm-Motiv nach dem erfindungsgemäßen Verfahren auch in mehr als vier Gitterzellen aufgeteilt unterbringen und auf diese Weise praktisch beliebig dünne Moiré-Magnifier herstellen.

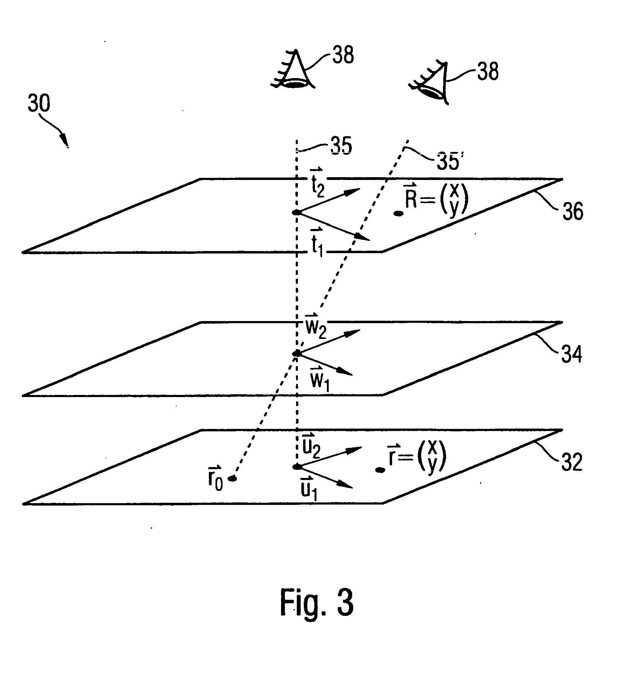

Zur Erläuterung der erfindungsgemäßen Vorgehensweise werden zunächst mit Bezug auf Fig. 3 die benötigten Größen definiert und kurz beschrieben. Für eine genauere Darstellung wird ergänzend auf die bereits genannte deutsche Patentanmeldung 10 2005 062132.5 und die internationale Anmeldung PCT/EP2006/012374 verwiesen, deren Offenbarungsgehalt insoweit in die vorliegende Anmeldung aufgenommen wird.

Fig. 3 zeigt schematisch eine nicht maßstäblich dargestellte Vergrößerungsanordnung vom Moirétyp 30 mit einer Motivebene 32, in der das Motivbild mit den Mikromotivbildteilen angeordnet ist, und mit einer Linsenebene 34, in der sich das Mikrolinsenraster befindet. Die Vergrößerungsanordnung vom Moirétyp 30 erzeugt eine Moiré-Bildebene 36, in der das vom Betrachter 38 wahrgenommene vergrößerte Moiré-Bild beschrieben wird.

Die Anordnung der Mikromotivbildteile in der Motivebene 32 wird durch ein zweidimensionales Bravais-Gitter beschrieben, dessen Einheitszelle durch Vektoren $\vec{u}_1$ und $\vec{u}_2$ (mit den Komponenten $u_{11}$, $u_{21}$ bzw. $u_{12}$, $u_{22}$) dargestellt werden kann. In kompakter Schreibweise kann die Einheitszelle auch in Matrixform durch eine Motivrastermatrix $\vec{U}$ (nachfolgend oft auch einfach Motivraster genannt) angegeben werden:

$$\vec{U} = (\vec{u}_1, \vec{u}_2) = \begin{pmatrix} u_{11} & u_{12} \\ u_{21} & u_{22} \end{pmatrix}.$$

In gleicher Weise wird die Anordnung von Mikrolinsen in der Linsenebene 34 durch ein zweidimensionales Bravais-Gitter beschrieben, dessen Einheitszelle durch die Vektoren $\vec{w}_1$ und $\vec{w}_2$ (mit den Komponenten $w_{11}$, $w_{21}$ bzw. $w_{12}$ $w_{22}$) angegeben wird. Mit den Vektoren $\vec{t}_1$ und $\vec{t}_2$ (mit den Komponenten $t_{11}$ $t_{21}$ bzw. $t_{12}$, $t_{22}$) wird die Einheitszelle in der Moire-Bildebene 36 beschrieben.

Mit $\vec{r} = \begin{pmatrix} x \\ y \end{pmatrix}$ ist ein allgemeiner Punkt der Motivebene 32 bezeichnet, mit $\vec{R} = \begin{pmatrix} X \\ Y \end{pmatrix}$ ein allgemeiner Punkt der Moire-Bildebene 36. Um neben senkrechter Betrachtung (Betrachtungsrichtung 35) auch nichtsenkrechte Betrachtungsrichtungen der Vergrößerungsanordnung vom Moiretyp beschreiben zu können, wie etwa die allgemeine Richtung 35', wird zusätzlich eine Verschiebung zwischen Linsenebene 34 und Motivebene 32 zugelassen, die durch einen Verschiebungsvektor $\vec{r}_0 = \begin{pmatrix} x_0 \\ y_0 \end{pmatrix}$ in der Motivebene 32 angegeben wird. Analog zur Motivrastermatrix werden zur kompakten Beschreibung des Linsenrasters und des Bildrasters die Matrizen $\vec{W} = \begin{pmatrix} w_{11} & w_{12} \\ w_{21} & w_{22} \end{pmatrix}$ (als Linsenrastermatrix oder einfach Linsenraster bezeichnet) und $\vec{T} = \begin{pmatrix} t_{11} & t_{12} \\ t_{21} & t_{22} \end{pmatrix}$ verwendet.

In der Linsenebene 34 können anstelle von Linsen 22 beispielsweise auch Lochblenden nach dem Prinzip der Lochkamera eingesetzt werden. Auch alle anderen Arten von Linsen und abbildenden Systemen, wie asphärische Linsen, Zylinderlinsen, Schlitzblenden, mit Spiegeln versehene Loch- oder Schlitzblenden, Fresnellinsen, GRIN-Linsen (Gradient Refraction Index), Zonenplatten (Beugungslinsen), holographische Linsen, Hohlspiegel, Fresnelspiegel, Zonenspiegel und andere Elemente mit fokussierender oder auch ausblendender Wirkung, können als Mikrofokussierelemente im Fokussierelementraster eingesetzt werden.

Grundsätzlich können neben Elementen mit fokussierender Wirkung auch Elemente mit ausblendender Wirkung (Loch- oder Spaltblenden, auch Spiegelflächen hinter Loch- oder Spaltblenden) als Mikrofokussierelemente im Fokussierelementraster eingesetzt werden.

Bei Anwendung eines Hohlspiegelarray und bei anderen erfindungsgemäß eingesetzten spiegelnden Fokussierelementrastern blickt der Betrachter durch das in diesem Fall teildurchlässige Motivbild auf das dahinter liegende Spiegelarray und sieht die einzelnen kleinen Spiegel als helle oder dunkle Punkte, aus denen sich das darzustellende Bild aufbaut. Das Motivbild ist dabei im Allgemeinen so fein strukturiert, dass es nur als Schleier zu sehen ist. Die beschriebenen Formeln für die Zusammenhänge zwischen dem darzustellenden Moiré-Bild und dem Motivbild gelten, auch wenn dies im Einzelnen nicht erwähnt wird, nicht nur für Linsenraster sondern auch für Spiegelraster. Es versteht sich, dass bei erfindungsgemäßem Einsatz von Hohlspiegeln an die Stelle der Linsenbrennweite die Spiegelbrennweite tritt.

Bei erfindungsgemäßer Anwendung eines Spiegelarray anstelle eines Linsenarray ist in Fig. 2 die Betrachtungsrichtung von unten zu denken, und in Fig. 3 sind bei der Spiegelarray-Anordnung die Ebenen 32 und 34 miteinander vertauscht. Die weitere Beschreibung der Erfindung erfolgt anhand von Linsenrastern, welche stellvertretend für alle anderen erfindungsgemäß eingesetzten Fokussierelementraster stehen.

Das Moiré-Bildgitter ergibt sich aus den Gittervektoren der Motivebene 32 und der Linsenebene 36 zu

$$\vec{T} = \vec{W} \cdot (\vec{W} - \vec{U})^{-1} \cdot \vec{U}$$

und die Bildpunkte der Moire-Bildebene 36 können mithilfe der Beziehung

$$\vec{R} = \vec{W} \cdot (\vec{W} - \vec{U})^{-1} \cdot (\vec{r} - \vec{r}_0)$$

aus den Bildpunkten der Motivebene 32 bestimmt werden. Umgekehrt ergeben sich die Gittervektoren der Motivebene 32 aus dem Linsenraster und dem gewünschten Moiré-Bildgitter durch

$$\vec{U} = \vec{W} \cdot (\vec{T} + \vec{W})^{-1} \cdot \vec{T}$$

und

$$\vec{r} = \vec{W} \cdot (\vec{T} + \vec{W})^{-1} \cdot \vec{R} + \vec{r}_0 \, .$$

Definiert man die Transformationsmatrix $\vec{A} = \vec{W} \cdot (\vec{W} - \vec{U})^{-1}$, die die Koordinaten der Punkte der Motivebene 32 und der Punkte der Moiré-Bildebene 36 ineinander überführt,

$$\vec{R} = \vec{A} \cdot (\vec{r} - \vec{r}_0), \text{ bzw. } \vec{r} = \vec{A}^{-1} \cdot \vec{R} + \vec{r}_0 \, ,$$

so können aus jeweils zwei der vier Matrizen $\vec{U}, \vec{W}, \vec{T}, \vec{A}$ die beiden anderen berechnet werden. Insbesondere gilt:

$$\vec{T} = \vec{A} \cdot \vec{U} = \vec{W} \cdot (\vec{W} - \vec{U})^{-1} \cdot \vec{U} = (\vec{A} - \vec{I}) \cdot \vec{W} \qquad \text{(M1)}$$

$$\vec{U} = \vec{W} \cdot (\vec{T} + \vec{W})^{-1} \cdot \vec{T} = \vec{A}^{-1} \cdot \vec{T} = (\vec{I} - \vec{A}^{-1}) \cdot \vec{W} \qquad \text{(M2)}$$

$$\vec{W} = \vec{U} \cdot (\vec{T} - \vec{U})^{-1} \cdot \vec{T} = (\vec{A} - \vec{I})^{-1} \cdot \vec{T} = (\vec{A} - \vec{I})^{-1} \cdot \vec{A} \cdot \vec{U} \qquad \text{(M3)}$$

$$\vec{A} = \vec{W} \cdot (\vec{W} - \vec{U})^{-1} = (\vec{T} + \vec{W}) \cdot \vec{W}^{-1} = \vec{T} \cdot \vec{U}^{-1} \qquad \text{(M4)}$$

wobei $\vec{I}$ die Einheitsmatrix bezeichnet.

Wie in der in Bezug genommenen deutschen Patentanmeldung 10 2005 062132.5 und der internationalen Anmeldung PCT/EP2006/012374 ausführlich geschildert, beschreibt die Transformationsmatrix $\vec{A}$ sowohl die Moire-Vergrößerung als auch die resultierende Bewegung des vergrößerten Moiré-Bildes bei Bewegung der Moiré-bildenden Anordnung 30, die von der Verschiebung der Motivebene 32 gegen die Linsenebene 34 herrührt.

Die Rastermatrizen T, U, W, die Einheitsmatrix I und die Transformationsmatrix A werden nachfolgend oft auch ohne Doppelpfeil geschrieben, wenn aus dem Zusammenhang klar ist, dass es sich um Matrizen handelt.

**Beispiel 1:**

Bei dem Design von Vergrößerungsanordnungen vom Moirétyp geht man in der Regel von einem vergrößerten Moiré-Bild als dem bei der Betrachtung zu sehenden Sollmotiv, dem gewünschten Vergrößerungsfaktor und dem gewünschten Bewegungsverhalten des Moiré-Bilds beim seitlichen und vor-/ rückwärtigen Kippen der Anordnung aus. Das gewünschte Vergrößerungs- und Bewegungsverhalten des Sollmotivs kann in der Transformationsmatrix $\vec{A}$ zusammengefasst werden.

Auch die Anordnung der Mikrolinsen kann, wie beim vorliegenden Beispiel, über die Linsenrastermatrix $\vec{W}$ vorgegeben werden. Alternativ können auch nur gewisse Einschränkungen oder Bedingungen an die Linsenanordnung gestellt werden, und die erforderliche Linsenanordnung zusammen mit dem Motivbild berechnet werden.

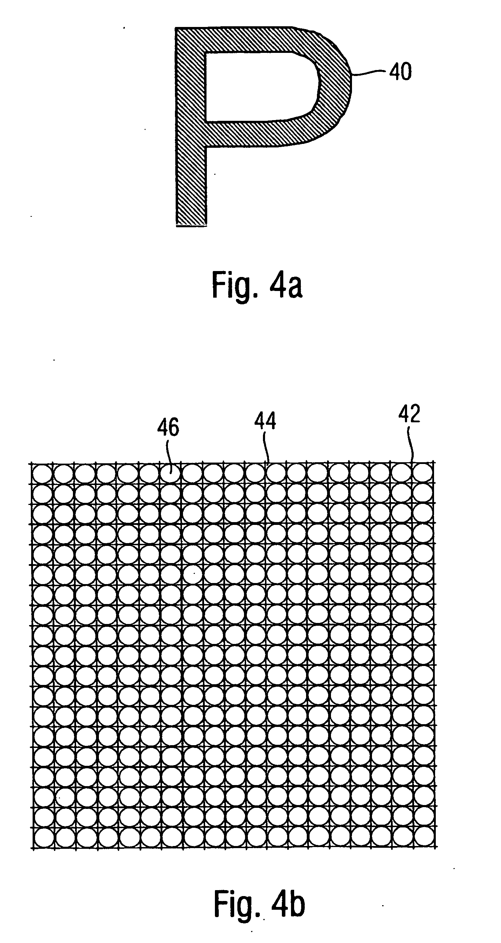

Zur Illustration zeigt Fig. 4(a) ein vorgegebenes Sollmotiv 40, hier in Form des Buchstabens "P" und Fig. 4(b) ein vorgegebenes Linsenarray mit sphärischen Mikrolinsen 46, die in einem einfachen Quadratgitter, dem Linsenraster 42 mit quadratischen Gitterzellen 44, angeordnet sind.

Das Vergrößerungs- und Bewegungsverhalten ist im Ausführungsbeispiel in Form der Transformationsmatrix

$$A = \begin{pmatrix} 7 & 0 \\ 0 & 7 \end{pmatrix} \qquad\qquad\qquad (B1\text{-}1)$$

vorgegeben, die eine reine Vergrößerung um einen Faktor 7 beschreibt. Es sei an dieser Stelle betont, dass zur Illustration des erfindungsgemäßen Prinzips bewusst einfache Ausführungsbeispiele beschrieben werden, die sich gut und in etwa maßstabsgetreu zeichnerisch darstellen lassen. Dazu werden in diesem und in den folgenden Beispielen einfache und hochsymmetrische Gitteranordnungen und einfache Transformationsmatrizen gewählt.

Aus den genannten Vorgaben erhält man das in die Motivebene einzubringende Mikromotiv in der oben beschriebenen Art und Weise durch Anwendung der Umkehrmatrix $\vec{A}^{-1}$ auf das Sollmotiv. Auch das Motivraster $\vec{U}$, in dem die Mikromotivelemente angeordnet werden müssen, ist durch die gemachten Vorgaben festgelegt und ergibt sich nach Beziehung (M2) durch

$$\vec{U} = (\vec{I} - \vec{A}^{-1}) \cdot \vec{W} . \qquad\qquad\qquad (B1\text{-}2)$$

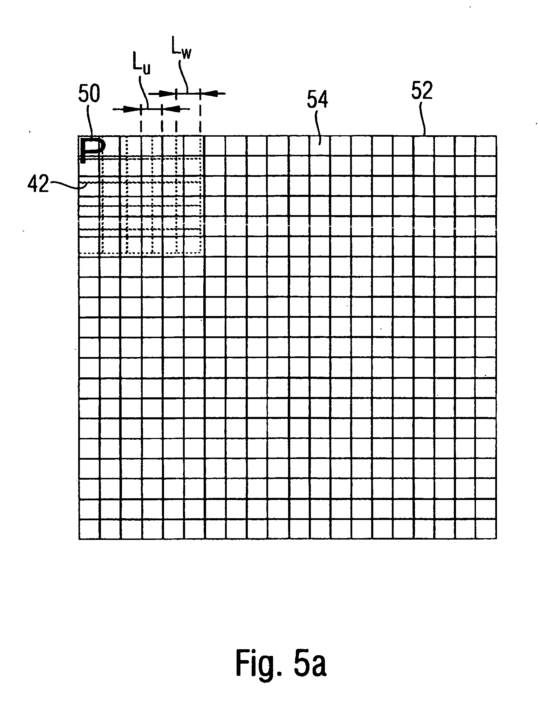

Fig. 5(a) zeigt das so berechnete einzubringende Mikromotivelement 50 und das Motivraster 52, das bei den gewählten Vorgaben ebenfalls ein einfaches Quadratgitter darstellt. Zusätzlich ist mit gestrichelten Linien ein Teil des Linsenrasters 42 eingezeichnet. Wie in Fig. 5(a) zu erkennen, ist die Periodizitätslänge Lu des Motivrasters 52 etwas kleiner als die Periodizitätslänge Lw des Linsenrasters 42, und zwar ist

$$L_U = 6/7 * L_W,$$

wie sich aus den Beziehungen (B1-1) und (B1-2) ergibt.

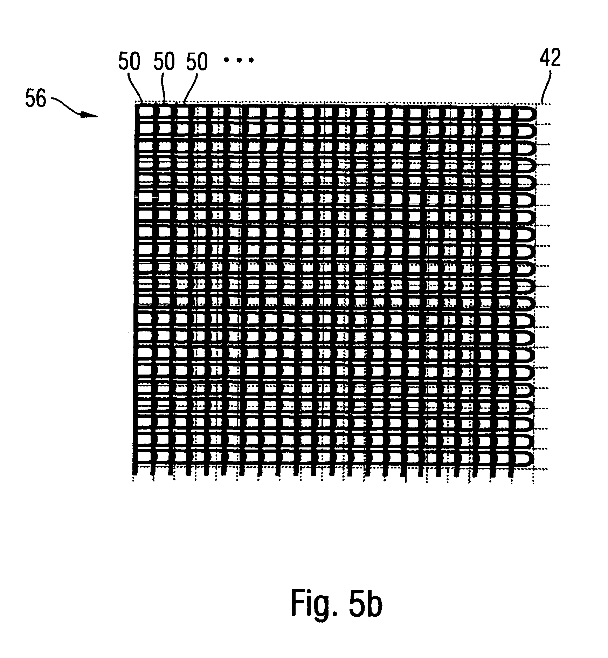

Wie in Fig. 5(a) weiter zu erkennen, ist das einzubringende Mikromotivelement 50 bei den gewählten Vorgaben größer als eine Gitterzelle 54 des Motivrasters 52. Wird das Mikromotivelement 50 daher in herkömmlicher Weise periodisch wiederholt im Motivraster 52 angeordnet, so entsteht das in Fig. 5(b) gezeigte Motivbild 56, das starke Überlappungen der einzelnen Motivelemente 50 aufweist. Wird das Motivbild 56 mit dem Linsenarray der Fig. 4(b) betrachtet, so zeigt auch das entstehende vergrößerte Moiré-Bild entsprechende unerwünschte Überlappungen der vergrößerten Buchstaben "P", und das Sollmotiv 40 ist im Moire-Bild nicht als solches zu erkennen.

Um diese Überlappungen zu beseitigen und die Darstellung eines lückenlosen, kontrastreichen Moiré-Bilds mit nicht überlappenden Moire-Bildelementen zu ermöglichen, werden erfindungsgemäß gleichartige Motiv-Teilmengen der Mikromotivelement-Anordnung 66 der Fig. 5(b) ermittelt, in denen die Mikromotivelemente 50 überlappungsfrei wiederholt angeordnet sind. Für diese Motiv-Teilmengen werden dann gleichartige, den Motiv-Teilmengen entsprechende Linsen-Teilmengen des Linsenrasters 42 bestimmt und der jeweiligen Motiv-Teilmenge zugeordnet. Für jede Linsen-Teilmenge wird dann der Schnitt des dieser Teilmenge entsprechenden Linsen-Teilrasters mit der zugehörigen Motiv-Teilmenge bestimmt, und zuletzt werden die entstehenden Schnitte entsprechend der relativen Position der Linsen-Teilmenge im Linsenraster 42 zu dem in der Motivebene anzuordnenden Motivbild zusammengesetzt.

Dass die ermittelten Motiv-Teilmengen alle "gleichartig" sein sollen bedeutete dabei, dass die Motiv-Teilmengen zusammen mit den entsprechenden Linsen-Teilmengen des Linsenrasters 42 jeweils Vergrößerungsanordnungen vom Moirétyp bilden, die nach den oben angegebenen Beziehungen zwischen den Bildpunkten der Moiré-Bildebene und den Bildpunkten der Motivebene

$$\vec{R} = \vec{W} \cdot (\vec{W} - \vec{U})^{-1} \cdot (\vec{r} - \vec{r}_0) \quad \text{bzw.} \quad \vec{R} = \vec{A} \cdot (\vec{r} - \vec{r}_0)$$

zum gleichen Sollmotiv führen.

Um im konkreten Ausführungsbeispiel solche gleichartigen Motiv-Teilmengen zu bestimmen, wird zunächst ein Übergitterraster des Motivrasters 52 ermittelt, in dem die Mikromotivelemente 50 ohne Überlappungen angeordnet werden können. Unter einem Übergitterraster wird dabei ein Raster verstanden, dessen Einheitszelle mehrere Gitterzellen des Motivrasters enthält.

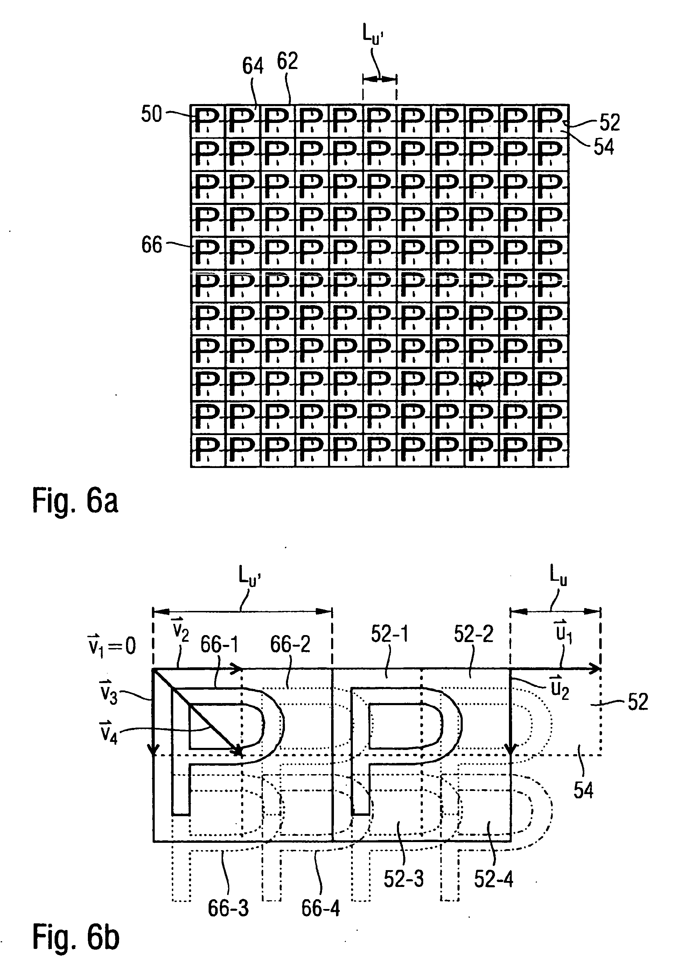

Fig. 6 zeigt ein solches Motiv-Übergitterraster 62 mit Gitterzellen 64, die jeweils aus 2 x 2 Gitterzellen 54 des gestrichelt eingezeichneten Motivrasters 52 bestehen. Die Periodizitätslänge $L_{U'}$ des Übergitterrasters 62 ist daher in beiden Raumrichtungen doppelt so groß ist wie die Periodizitätslänge Lu des Motivrasters 52. Insbesondere ist das Motiv-Übergitterraster 62 gerade so gewählt, dass seine Gitterzellen 64 größer als das wiederholt einzubringende Mikromotivelement 50 sind. Die Wahl eines solchen Übergitterrasters ist nicht eindeutig, im Ausführungsbeispiel hätte beispielsweise auch ein Übergitterraster mit 2 x 3, 2 x 3, 3 x 3, oder einer noch größeren Zahl von Gitterzellen 54 gewählt werden können. Um den zur Verfügung stehenden Platz im Motivbild optimal auszunutzen, wird vorzugsweise dasjenige Motiv-Übergitterraster mit der kleinsten Einheitszelle gewählt, die noch groß genug ist, ein Mikromotivelement 50 vollständig aufzunehmen.

Wird das Mikromotivelement 50 nun mit der Periodizität des Motiv-Übergitterrasters 62, im Ausführungsbeispiel also mit der Periodizitätslänge $L_{U'}$ wiederholt in der Motivebene angeordnet, so ergeben sich nach der Wahl des Übergitterrasters 62 keine Überlappungen der Mikromotivelemente 50 mehr, wie in Fig. 6(a) gezeigt. Die mit der Periodizitätslänge $L_{U'}$ wiederholte Anordnung 66 der Mikromotivelemente 50 der Fig. 6(a) stellt dabei nur eine Teilmenge der gesamten, mit der Periodizitätslänge $L_U$ wiederholten Anordnung 56 der Mikromotivelemente 50 der Fig. 5(b) dar und enthält im Ausführungsbeispiel wegen

$$L_U * L_U = \frac{1}{4} \ L_{U'} * L_{U'}$$

nur ein Viertel der ursprünglichen Elemente.

Fig. 6(b) zeigt einen Teil des Motiv-Übergitterrasters 62 und des gestrichelt eingezeichneten Motivrasters 52 nochmals im Detail. Rechts neben den beiden herausgegriffenen Gitterzellen 64 des Motiv-Übergitterrasters 62 sind die Gittervektoren $\vec{u}_1$ und $\vec{u}_2$ des Motivrasters 52 eingezeichnet.

Wie aus Fig. 6(b) ersichtlich, kann das Motivraster 52 in vier Teilraster 52-1, 52-2, 52-3 und 52-4 zerlegt werden, die jeweils nur ein Viertel der ursprünglichen Gitterzellen 54 des Motivrasters 52 enthalten, und die jeweils die Symmetrie des Motiv-Übergitterrasters 62 aufweisen, also eine Periodizitätslänge $L_{U'}$ besitzen. Zusammengenommen ergeben die vier Teilraster 52-1, 52-2, 52-3 und 52-4 gerade wieder das vollständige Motivraster 52. Im Ausführungsbeispiel sind die vier Teilraster gegeben durch die jeweils linke obere Gitterzelle 54 jeder Übergitterzelle 64 (Teilraster 52-1), durch die jeweils rechte obere Gitterzelle 54 jeder Übergitterzelle 64 (Teilraster 52-2), durch die jeweils linke untere Gitterzelle 54 jeder Übergitterzelle 64 (Teilraster 52-3) und durch die jeweils rechte untere Gitterzelle 54 jeder Übergitterzelle 64 (Teilraster 52-4).

Bezogen auf eine Übergitterzelle 64 weisen die vier Teilraster 52-1, 52-2, 52-3 und 52-4 einen Versatz auf, der jeweils durch einen Teilraster-Verschiebungsvektor $v_1$, $v_2$, $v_3$, bzw. $v_4$ (Fig. 6(b)) beschrieben wird. Die Verschiebungsvektoren können durch die Gittervektoren $\vec{u}_1$ und $\vec{u}_2$ mittels

$v_1 = 0;$
$v_2 = u_1;$
$v_3 = u_2;$ und
$v_4 = u_1 + u_2;$

ausgedrückt werden.

Ebenfalls in Fig. 6(b) eingezeichnet sind die vier gleichartigen Motiv-Teilmengen 66-1, 66-2, 66-3 und 66-4, die sich durch Verschiebung der nicht überlappenden Anordnung 66 der Motivelemente 50 um die Verschiebungsvek-

toren $v_1$ bis $v_4$ ergeben. Durch die Konstruktion der Motiv-Teilmengen ist sichergestellt, dass jede der Motiv-Teilmengen eine überlappungsfreie Anordnung der Motivelemente 50 enthält, dass die Motiv-Teilmengen gleichartig sind und daher bei Betrachtung mit dem Linsenarray jeweils das gleiche Sollmotiv erzeugen und dass die Motiv-Teilmengen zusammengenommen gerade wieder die vollständige Motivelement-Anordnung 56 der Fig. 5(b) ergeben.

Dem Übergitterraster 62 des Motivrasters 52 entspricht über die oben angegebene Beziehung (M3) ein Übergitterraster 72 des Linsenrasters 42. Im Ausführungsbeispiel, in dem jede Übergitterzelle 64 des Motiv-Übergitterrasters 62 aus 2 x 2 Gitterzellen 54 des Motivrasters 52 besteht, ist das Linsen-Übergitterraster 72 aus Übergitterzellen 74 gebildet, die aus ebenfalls 2 x 2 Gitterzellen 44 des Linsenrasters 42 bestehen. Die Periodizitätslänge $L_{W'}$ des Linsen-Übergitterrasters 72 ist daher in beiden Richtungen doppelt so groß wie die Periodizitätslänge Lw des Linsenrasters 42.

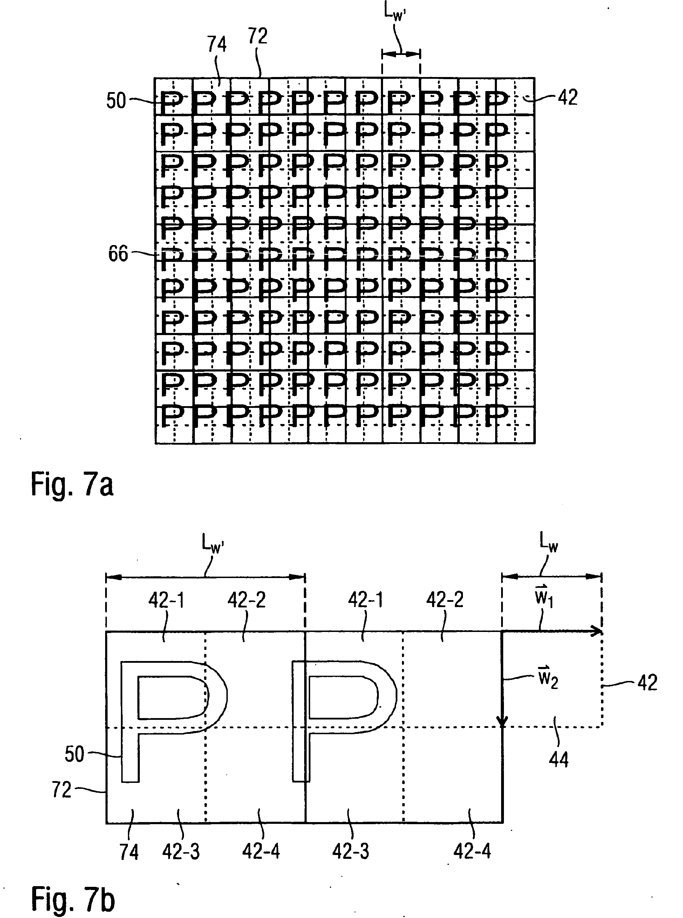

Dieses Linsen-Übergitterraster 72, das den Ausgangspunkt für das weitere Vorgehen bildet, ist in Fig. 7 zusammen mit den mit der Periodizität $L_{U'}$ des Motiv-Übergitterrasters 62 wiederholten Mikromotivelementen 50 dargestellt.

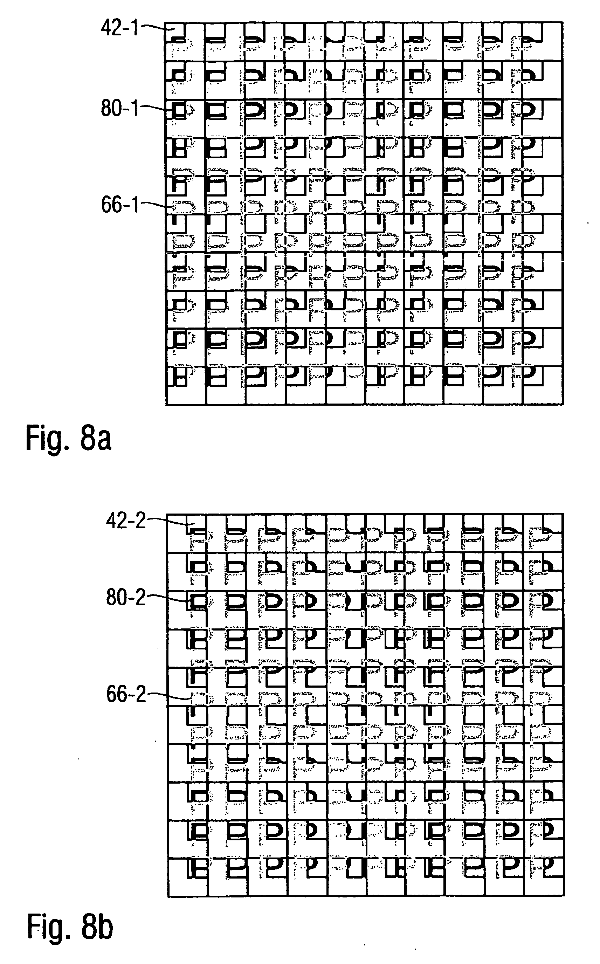

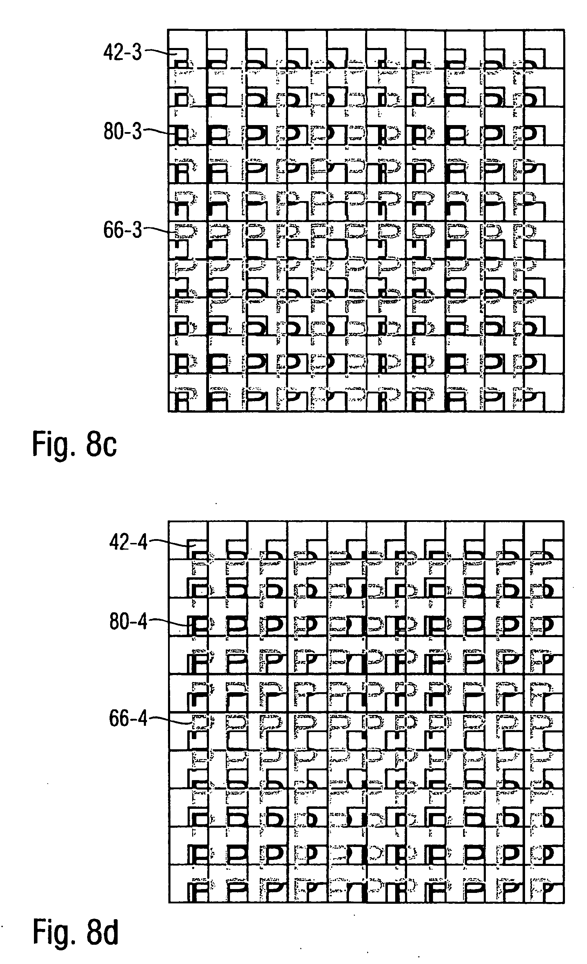

Analog zur Zerlegung des Motivrasters 52 der Fig. 6(b) kann auch das Linsenraster 42 in vier Teilraster 42-1, 42-2, 42-3 und 42-4 zerlegt werden, die jeweils nur ein Viertel der ursprünglichen Gitterzellen 44 des Linsenrasters 42 enthalten und die Symmetrie des Linsen-Übergitterrasters 72, also eine Periodizitätslänge $L_{W'}$ aufweisen. Dies ist in der Fig. 7(b) illustriert, die das Linsen-Übergitterraster 72 und das gestrichelt eingezeichnete Linsenraster 42 im Detail zeigt. Rechts neben den beiden herausgegriffenen Gitterzellen 74 des Linsen-Übergitterrasters 72 sind die Gittervektoren $\vec{w}_1$ und $\vec{w}_2$ des Linsenrasters 42 eingezeichnet. Wie aus Fig. 7(b) ersichtlich, enthalten die vier Teilraster 42-1, 42-2, 42-3 und 42-4 des Linsenrasters 42 jeweils ein Viertel der ursprünglichen Gitterzellen und ergeben zusammen das vollständige Linsenraster 42. Im Ausführungsbeispiel sind die vier Teilraster durch die jeweils linke obere Gitterzelle 44 jeder Übergitterzelle 74 (Teilraster 42-1, siehe auch Fig. 8(a)), durch die jeweils rechte obere Gitterzelle 44 jeder Übergitterzelle 74 (Teilraster 42-2, siehe auch Fig. 8(b)), durch die jeweils linke untere Gitterzelle 44 jeder Übergitterzelle 74 (Teilraster 42-3, siehe auch Fig. 8(c)) und durch die jeweils rechte untere Gitterzelle 44 jeder Übergitterzelle 74 (Teilraster 42-4, siehe auch Fig. 8(d)) gegeben.

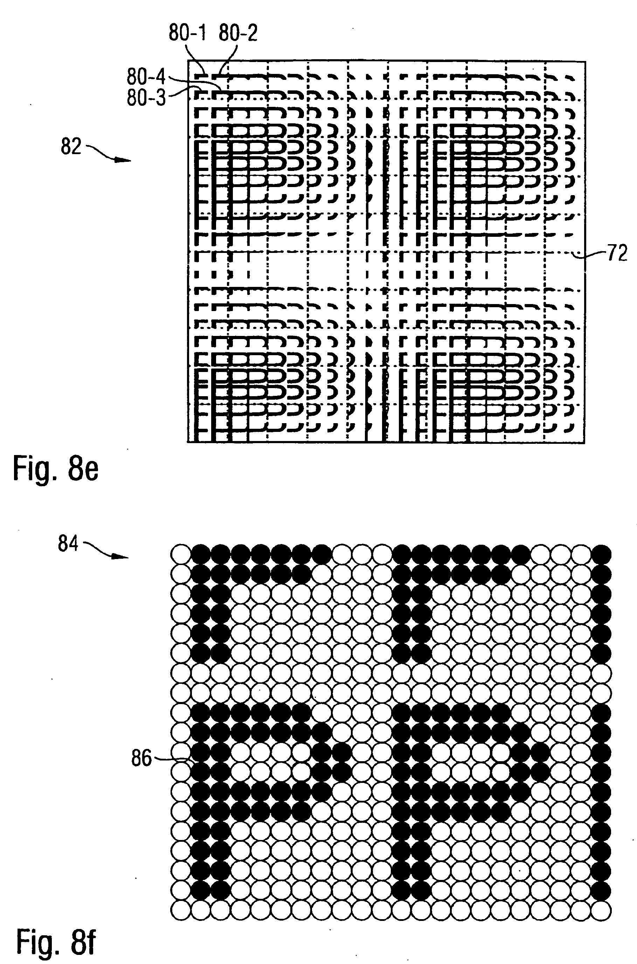

Um ein vollständiges und überlappungsfreies Motivbild zu erhalten, wird, wie nunmehr mit Bezug auf Fig. 8 erläutert, für jedes der Teilraster 42-1, 42-2, 42-3 und 42-4 des Linsenrasters 42 ein Schnittbild mit einer geeignet verschobenen Anordnung 66 der Motivbildelemente 50, also mit einer der Motiv-Teilmengen 66-1, 66-2, 66-3 und 66-4 bestimmt und die Schnittbilder der vier Teilraster entsprechend ihrer relativen Position im Linsen-Übergitterraster 72 zusammengesetzt.

Zunächst wird das erste Teilraster 42-1 ausgewählt, wie in Fig. 8(a) gezeigt, und mit der bei Fig. 6(a) ermittelten Anordnung der Motivbildelemente 50 geschnitten. Die Motivbildelement-Anordnung (Motiv-Teilmenge) 66-1 vor dem Schnitt ist dabei grau dargestellt, die ausgeschnittenen Motivbildteile 80-1 schwarz. Die unverschobene Motivbildelement-Anordnung 66-1 entspricht dabei einer Verschiebung der Motivbildelement-Anordnung 66 der Fig. 6(a) um den Teilraster-Verschiebungsvektor $v_1 = 0$ des ersten Motiv-Teilrasters 52-1.

Dann wird, wie in Fig. 8(b) gezeigt, das zweite Teilraster 42-2 des Linsenrasters 42 ausgewählt. Das dem zweiten Linsen-Teilraster 42-2 entsprechende Motiv-Teilraster 52-2 weist, bezogen auf die Übergitterzelle 64, einen Teilraster-Verschiebungsvektor $v_2 = u_1$ auf (Fig. 6(b)). Die Motivbildelement-Anordnung 66 der Fig. 6(a) wird nun in der Motivebene zunächst um diesen Verschiebungsvektor $v_2$ verschoben und dann mit dem zweiten Linsen-Teilraster 42-2 geschnitten. Auch in Fig. 8(b) ist die verschobene Motivbildelement-Anordnung (Motiv-Teilmenge) 66-2 vor dem Schnitt grau und sind die ausgeschnittenen Motivbildteile 80-2 schwarz dargestellt.

Diese Vorgehensweise wird dann mit dem dritten Teilraster 42-3 und dem vierten Teilraster 42-4 wiederholt, wobei die Motivbildelement-Anordnung 66 der Fig. 6(a) vor dem Schnitt jeweils um den Verschiebungsvektor $v_3$ bzw. $v_4$ verschoben wird. Die Teilraster 42-3 bzw. 42-4, die verschobene Motivbildelement-Anordnungen (Motiv-Teilmengen) 66-3 bzw. 66-4 und die ausgeschnittenen Motivbildteile 80-3 bzw. 80-4 sind in den Figuren 8(c) und 8(d) dargestellt. Durch die beschriebene wiederholte Verschiebung der Motivbildelement-Anordnung 66 für die verschiedenen Teilraster werden jeweils disjunkte Teilmengen der in Fig. 5(b) gezeigten vollständigen Anordnung 56 der Mikromotivelemente 50 erfasst und insgesamt alle Mikromotivelemente 50 berücksichtigt.

Es versteht sich, dass bei einer anderen Wahl der Übergitter auch eine andere Zahl und Anordnung der Teilraster entstehen kann. Beispielsweise gibt es bei einem Linsen- und Motiv-Übergitter aus 2 x 3 Gitterzellen jeweils 6 Teilraster, deren Versatz jeweils durch Teilraster-Verschiebungsvektoren $v_1$ bis $v_6$ ausgedrückt werden kann. Entsprechend werden dann 6 Schnitte der Teilraster mit den entsprechend verschobenen Motivbildelement-Anordnungen erzeugt.

Zuletzt werden die vier Schnittbilder 80-1, 80-2, 80-3 und 80-4 entsprechend der relativen Position der Teilraster 42-1, 42-2, 42-3 und 42-4 zusammengesetzt, so dass sich das in Fig. 8(e) illustrierte fertige Motivbild 82 ergibt. Zur Verdeutlichung ist das Linsen-Übergitterraster 72 punktiert angedeutet.

Wird dieses Motivbild 82 nun mit dem Linsenarray der Fig. 4(b) betrachtet, so ergibt sich das in Fig. 8(f) gezeigte, vergrößerte Moiré-Bild 84, das die gewünschten, nicht überlappenden und entsprechend der vorgegebenen Transformationsmatrix 7-fach vergrößerten Moiré-Bildelemente 86 zeigt.

**Beispiel 2:**

Beispiel 2 geht wie Beispiel 1 von dem in Fig. 4(a) vorgegebenen Sollmotiv 40 in Form des Buchstabens "P" und dem in Fig. 4(b) vorgegebenen Linsenarray mit quadratischem Linsenraster 42 aus. Es versteht sich, dass an Stelle des hier im Beispiel gezeigten Buchstabens "P" auch alphanumerische Zeichenfolgen, ganze Texte oder andere größere Motive in gleicher Weise behandelt werden können. Man kann also nach diesem Verfahren auch ein längeres Wort, das nicht unter eine Linse im Linsenarray eines Moiré-Magnifiers passt, nach dem Moiré-Magnifier-Vergrößerungsprinzip erfindungsgemäß vergrößern.

Das Vergrößerungs- und Bewegungsverhalten wird bei Beispiel 2 durch die Transformationsmatrix

$$A = \frac{1}{2\sin 4°}\begin{pmatrix} \cos 86° & -\sin 86° \\ \sin 86° & \cos 86° \end{pmatrix}$$

vorgegeben, mit der neben einer Vergrößerung auch ein in etwa orthoparallaktischer Bewegungseffekt beschrieben wird.

Wie bei Beispiel 1 erhält man zunächst aus der Transformationsmatrix A und der Linsenrastermatrix W mithilfe der Umkehrmatrix $A^{-1}$ das in die Motivebene einzubringende Mikromotivelement und das Motivraster U.

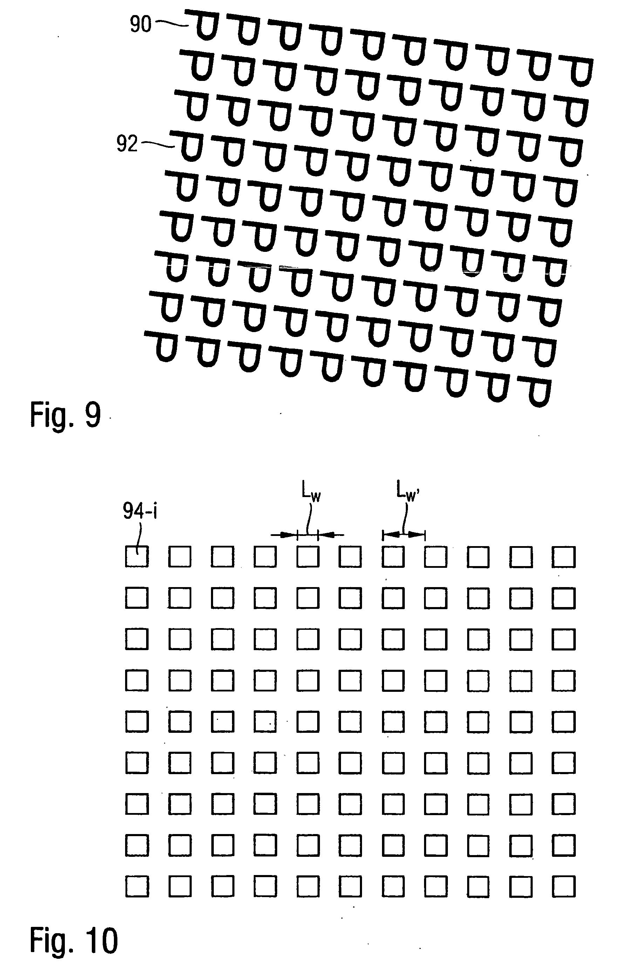

Auch bei Beispiel 2 führen die gewählten Vorgaben zu einem Mikromotivelement 90 (Fig. 9), das größer als die Ausdehnung Lu einer Gitterzelle des Motivrasters U ist. Eine herkömmliche wiederholte Anordnung der Mikromotivelemente 90 im Abstand Lu führt daher zu Überlappungen der Mikromotivelemente im Motivbild und damit auch zu unerwünschten Überlappungen im vergrößerten Moiré-Bild.

Zur Beseitigung dieser Überlappungen und zur Darstellung eines lückenlosen, kontrastreichen Moiré-Bilds mit nicht überlappenden Moiré-Bildelementen wird ein Übergitterraster des Motivrasters U ermittelt, in dem die Mikromotivelemente 90 überlappungsfrei angeordnet werden können. Fig. 9 zeigt eine solche, nicht überlappende Anordnung 92 der Mikromotivelemente 90 innerhalb eines Motiv-Übergitters, das aus 2 x 2 Motiv-Gitterzellen besteht.

Dann wird das Motivraster in vier Teilraster zerlegt und die Teilraster-Verschiebungsvektoren $v_j$ (j=1...4) für den Versatz des jeweiligen Teilrasters bestimmt.

Weiter wird das dem Motiv-Übergitterraster entsprechende Linsen-Übergitterraster bestimmt und in ebenfalls vier Teilraster zerlegt. Eines dieser vier Teilraster 94-j ist zusammen mit der Periodizitätslänge $L_{W'}$ des Linsen-Übergitterrasters und der Periodizitätslänge Lw des Linsenrasters in Fig. 10 dargestellt.

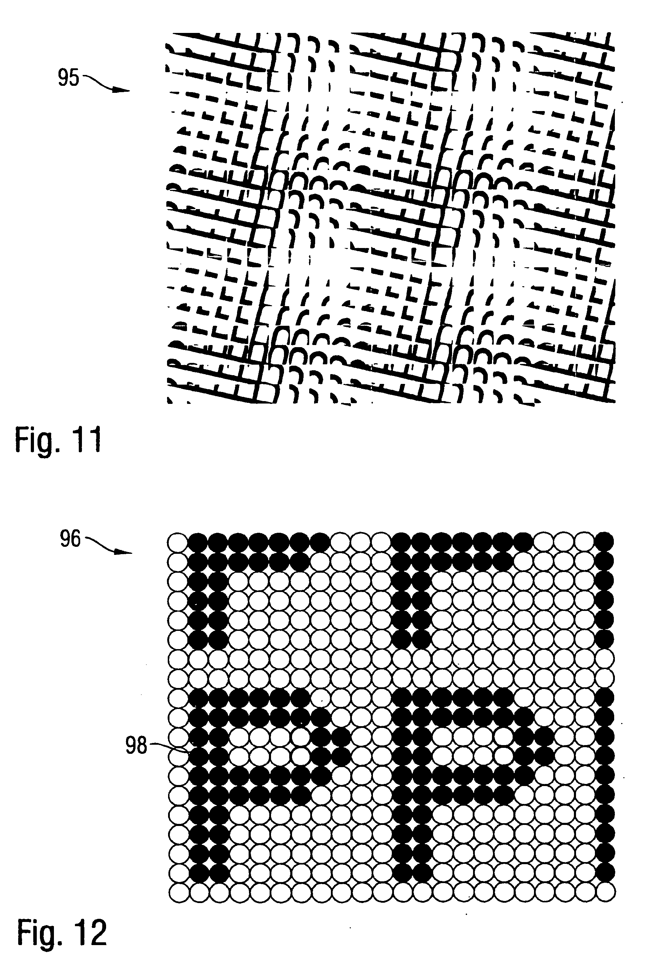

Nun wird, analog zu der bei Fig. 8 beschriebenen Vorgehensweise, für jedes der Linsen-Teilraster 94-j das zugehörige Motiv-Teilraster und dessen Teilraster-Verschiebungsvektor $v_j$ ermittelt, die überlappungsfreie Anordnung 92 der Motivbildelemente 90 um diesen Teilraster-Verschiebungsvektor $v_j$ verschoben und mit dem Linsen-Teilraster 94-j zum Schnitt gebracht. Die entstehenden vier Schnittbilder werden dann entsprechend der Position der Linsen-Teilraster 94-j im Linsen-Übergitterraster zusammengesetzt, wie in Fig. 11 gezeigt, und bilden das fertige Motivbild 95.

Wird dieses Motivbild 95 nun mit dem Linsenarray der Fig. 4(b) betrachtet, so ergibt sich das in Fig. 12 gezeigte, vergrößerte Moiré-Bild 96, das die gewünschten, nicht überlappenden und entsprechend der vorgegebenen Transformationsmatrix vergrößerten Moiré-Bildelemente 98 zeigt.

Mit der in Beispiel 2 angewandten Vergrößerungs- und Bewegungsmatrix A wird ein in etwa orthoparallaktischer Bewegungseffekt erreicht: Beim seitlichen Kippen der Moire-Anordnung bestehend aus dem Motivbild 95 der Fig. 11 und Linsenraster der Fig. 4(b) bewegt sich das vergrößerte Moiré-Bild 96 der Fig. 12 ungefähr in vertikaler Richtung, beim vertikalen Kippen bewegt es sich seitlich nach rechts oder links.

**Beispiel 3:**

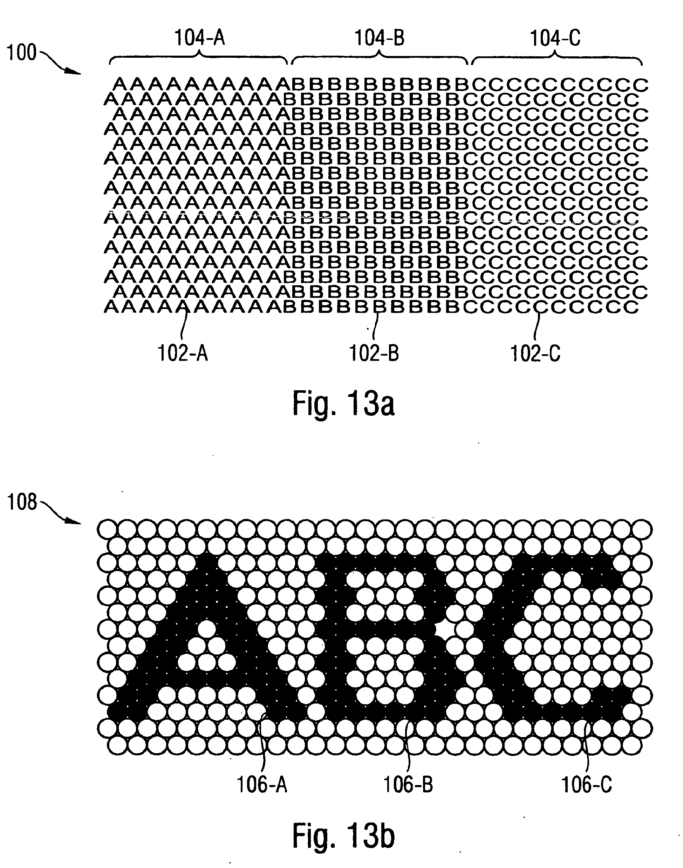

Beispiel 3 illustriert ein alternatives und besonders einfaches Verfahren, gro-βe Bildmotive in einer Moiré-Magnifier-Anordnung unterzubringen. Beispielsweise kann ein ganzes Alphabet in einem Moiré-Magnifier untergebracht werden, wobei die Vorgehensweise für die ersten Buchstaben des Alphabets anhand von Fig. 13 erläutert wird.

Fig. 13(a) zeigt eine aus Motiven "A", "B", "C" zusammengesetzte Motivschicht 100, die mit dem passenden Linsenraster kombiniert das vergrößerte Moire-Bild 108 der Fig. 13(b) ergibt. Dazu werden die Mikromotivelemente 102-A, 102-B, 102-C für jeden darzustellenden Buchstaben in einem Flächenstück 104-A, 104-B, 104-C der Motivschicht 100 des Moiré-Magnifiers untergebracht, welches gerade so groß ist, dass es den Moiré-vergrößerten Buchstaben 106-A, 106-B, 106-C des Moiré-Bilds 108 aufnehmen kann. Die beim Moiré-Magnifier herkömmlich auftretende Wiederholung des Motivs wird hier also erfindungsgemäß unterdrückt.

**Beispiel 4:**

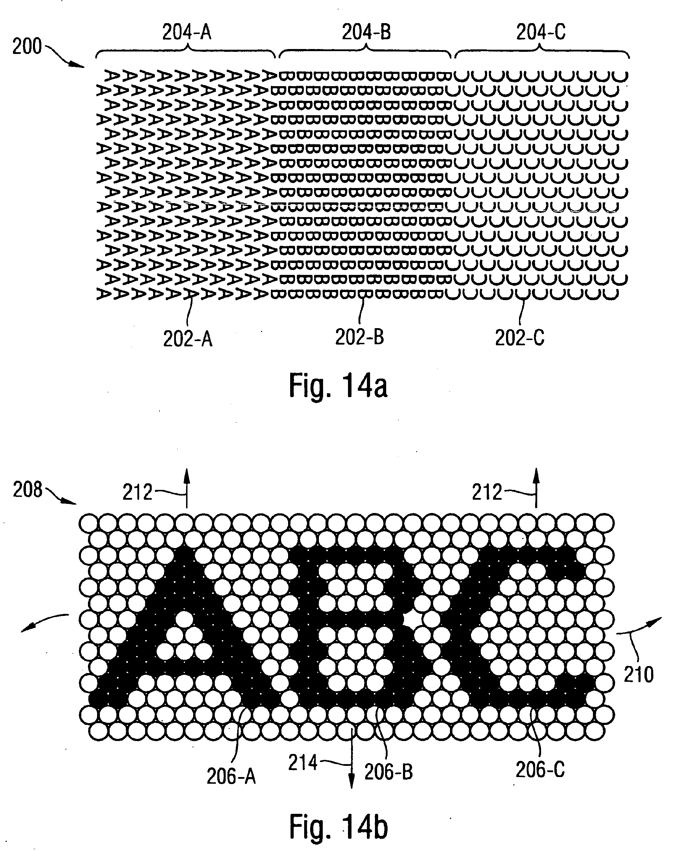

Mit Bezug auf das in Fig. 14 illustrierte Beispiel 4 können sich die Buchstaben "A" (206-A), "B" (206-B), "C" (206-C) und eventuelle weitere Bestandteile des in Fig. 14(b) gezeigten Moire-Bilds 208 beim Kippen auch in unterschiedlicher Weise bewegen. Beispielsweise sollen sich die Buchstaben 206-A, 206-B, 206-C ... beim seitlichen Kippen wechselweise nach oben und unten, beim vertikalen Kippen jedoch gleichgerichtet bewegen.

Es sei mit a der Linsenabstand im hexagonalen Linsenraster der Fig. 14(b) bezeichnet. Die Linsenraster-Anordnung der Fig. 14(b) wird dann beschrieben durch die Matrix

$$W = \begin{pmatrix} 0 & a/2 \\ a & a\sqrt{3}/2 \end{pmatrix}.$$

Ist m der gewünschte Moiré-Vergrößerungsfaktor, so wird eine vertikale Bewegung im Moiré-Bild beim seitlichen Kippen beschrieben durch die Bewegungsmatrix

$$A_1 = m \cdot \begin{pmatrix} 0 & 1 \\ 1 & 0 \end{pmatrix}.$$

Eine entgegengesetzte vertikale Bewegung im Bild beim seitlichen Kippen unter Beibehaltung der Bewegungsrichtung beim vertikalen Kippen wird beschrieben durch die Bewegungsmatrix

$$A_2 = m \cdot \begin{pmatrix} 0 & 1 \\ -1 & 0 \end{pmatrix}$$

Für die Motiv-Anordnungen für die Motiv-Buchstaben "A" (202-A) und "C" (202-C) in den Feldern 204-A und 204-C der Motivschicht 200 (Fig. 14(a)) wählen wir die Rastermatrix

$$U_1 = (I - A_1^{-1}) \cdot W = \begin{pmatrix} 1 & -1/m \\ -1/m & 1 \end{pmatrix} \cdot \begin{pmatrix} 0 & a/2 \\ a & a\sqrt{3}/2 \end{pmatrix} = \begin{pmatrix} -a/m & a/2 - a\sqrt{3}/2m \\ a & -a/2m + a\sqrt{3}/2 \end{pmatrix}.$$

Für die Motiv-Anordnung für die Motiv-Buchstaben "B" (202-B) im Feld 204-B der Fig. 14(a) wählen wir

$$U_2 = (I - A_2^{-1}) \cdot W = \begin{pmatrix} 1 & 1/m \\ -1/m & 1 \end{pmatrix} \cdot \begin{pmatrix} 0 & a/2 \\ a & a\sqrt{3}/2 \end{pmatrix} = \begin{pmatrix} a/m & a/2 + a\sqrt{3}/2m \\ a & -a/2m + a\sqrt{3}/2 \end{pmatrix}.$$

Bei so gewählten Rasteranordnungen bewegen sich beim seitlichen Kippen in Kipprichtung 210 (rechts nach oben, links nach unten) die Buchstaben "A" (206-A) und "C" (206-C) in Fig. 14(b) nach oben (Richtung 212), der Buchstabe "B" (206-B) in Fig. 14(b) nach unten (Richtung 214). Beim vertikalen Kippen (vorne nach oben) bewegen sich alle Buchstaben nach rechts, beim Zurückkippen nach links.

Falls auch beim vertikalen Kippen sich die Buchstaben gegenläufig bewegen sollen, wird nachfolgende Bewegungsmatrix angewandt. Ein besonderer Effekt bei solchen gegenläufigen Bewegungen ist, dass sich die Buchstaben nur in bestimmten Kipprichtungen zu einer gut erkennbaren Folge (z.B. einem Wort, im Ausführungsbeispiel "ABC") zusammenfügen.

$$A_2 = -m \cdot \begin{pmatrix} 0 & 1 \\ 1 & 0 \end{pmatrix}$$

$$U_2 = (I - A_2^{-1}) \cdot W = \begin{pmatrix} 1 & 1/m \\ 1/m & 1 \end{pmatrix} \cdot \begin{pmatrix} 0 & a/2 \\ a & a\sqrt{3}/2 \end{pmatrix} = \begin{pmatrix} a/m & a/2 + a\sqrt{3}/2m \\ a & a/2m + a\sqrt{3}/2 \end{pmatrix}$$

Diese Bewegungsabläufe sind lediglich beispielhaft genannt. Andere Bewegungsabläufe in beliebigen Richtungen beim Kippen können gemäß der Lehre der PCT/EP2006/012374 berechnet werden, deren Offenbarungsgehalt insoweit in die vorliegende Anmeldung aufgenommen wird. Auch können sich Bewegungsrichtung und/oder Vergrößerung örtlich ändern, wobei die Bereichsbreiten und Bereichsbegrenzungen entsprechend angepasst werden.

**Beispiel 5:**

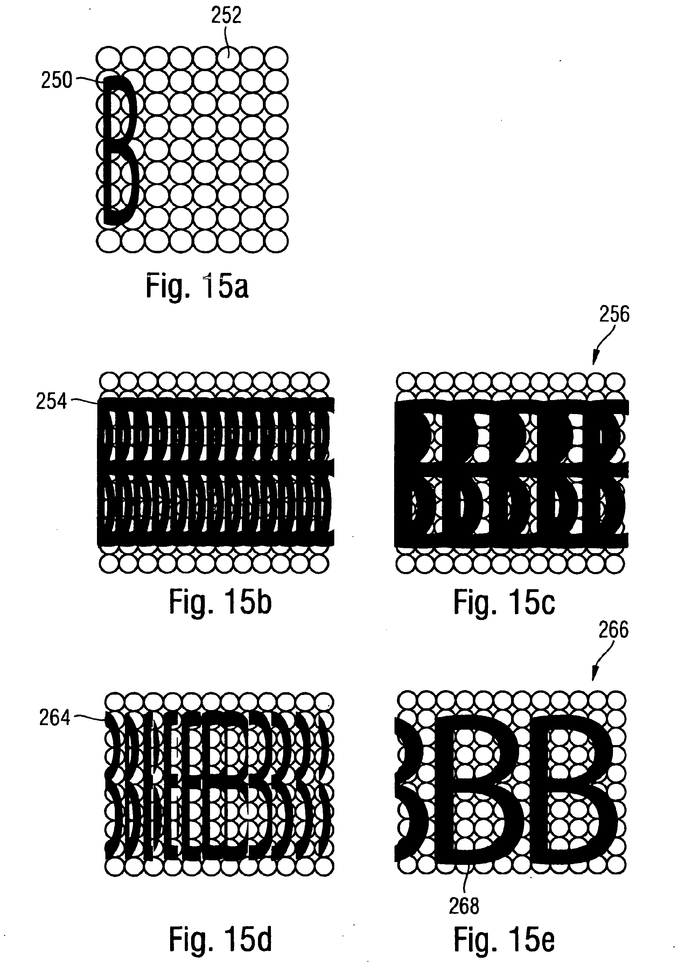

Wie der bereits mehrfach erwähnten und auch diesbezüglich in die vorliegende Beschreibung aufgenommenen Anmeldung PCT/EP2006/012374 zu entnehmen ist, lassen sich beim Moiré-Magnifier in einer Richtung (z.B. vertikal) unendlich ausgedehnte Motiv-Gitterzellen mit beliebig langen Motiven anwenden. In anderen Richtungen (z.B. seitlich) ist die Gitterzellengröße beschränkt. Hierbei können - wie in PCT/EP2006/012374 erläutert - entweder Zylinderlinsen oder zweidimensionale Linsenarrays angewandt werden.
Wenn in einer Richtung ein größeres Motiv mit 1:1 Abbildung vorliegt, lässt sich die Vorgehensweise von Beispiel 1 entsprechend modifiziert anwenden. Ein konkretes Beispiel hierzu zeigt Fig. 15. Ein verzerrtes Motiv 250 (Buchstabe "B") soll in der Höhe 1:1 abgebildet, in der Breite vergrößert und entzerrt abgebildet werden. In der Breite erstreckt sich das Motiv über die Breite von zwei Linsen 252 im Linsenraster, siehe Fig. 15(a). Damit ergibt sich ohne erfindungsgemäßes Vorgehen eine überlappende Motivelement-Anordnung 254, wie Fig. 15(b) dargestellt, und entsprechend auch ein überlappendes Moire-Bild 256, wie Fig. 15(c) gezeigt. Bei einer erfindungsgemäßen Vorgehensweise analog zu Beispiel 1 erhält man stattdessen das in Fig. 15(d) dargestellte Motivbild 264 und ein ordentliches Moiré-Bild 266 mit nicht überlappenden Moiré-Bildelementen 268, wie Fig. 15(e) gezeigt.
Für die Beispiele 1 bis 5 wurden zur Illustration bewusst einfache Beispiele gewählt, die sich gut und ungefähr maßstabsgerecht zeichnen lassen. Es wurden einfache, sehr symmetrische Gitteranordnungen W (hexagonal bzw. quadratisch) gewählt, und einfache Vergrößerungs- und Bewegungsmatrizen A (nur Vergrößerung bzw. Vergrößerung mit Drehung). Die Erfindung umfasst selbstverständlich für die Matrix W alle zweidimensionalen Bravaisgitter, insbesondere auch solche niederer Symmetrie und für A alle zweidimensionalen Matrizen, d.h. alle Produkte aus Vergrößerung, Spiegelung, Drehung und Scherung, wie beispielsweise in der Druckschrift PCT/EP2006/012374 ausführlich erläutert, die diesbezüglich und vollinhaltlich in die vorliegende Anmeldung einbezogen wird.

**Patentansprüche**

1. Sicherheitselement für Sicherheitspapiere, Wertdokumente und dergleichen, mit einer mikrooptischen Vergrößerungsanordnung vom Moirétyp zur nicht-überlappenden Darstellung eines vorgegebenen Moiré-Bildes mit einem oder mehreren Moire-Bildelementen, mit

- einem Motivbild, das eine periodische oder zumindest lokal periodische Anordnung einer Mehrzahl von Gitterzellen mit Mikromotivbildteilen enthält,
- einem zum Motivbild beabstandet angeordneten Fokussierelementraster zur Moiré-vergrößerten Betrachtung des Motivbilds, das eine periodische oder zumindest lokal periodische Anordnung einer Mehrzahl von Gitterzellen mit jeweils einem Mikrofokussierelement enthält,

wobei die Mikromotivbildteile mehrerer beabstandeter Gitterzellen des Motivbilds zusammengenommen jeweils ein Mikromotivelement bilden, das einem der Moiré-Bildelemente des vergrößerten Moiré-Bildes entspricht und wobei die Ausdehnung des Mikromotivelements größer als eine Gitterzelle des Motivbilds ist.

2. Sicherheitselement nach Anspruch 1, **dadurch gekennzeichnet, dass** sowohl die Gitterzellen des Motivbilds als auch die Gitterzellen des Fokussierelementrasters periodisch angeordnet sind, oder dass sowohl die Gitterzellen des Motivbilds als auch die Gitterzellen des Fokussierelementrasters lokal periodisch angeordnet sind, wobei sich die lokalen Periodenparameter im Verhältnis zur Periodizitätslänge nur langsam ändern.

3. Sicherheitselement nach Anspruch 1 oder 2, **dadurch gekennzeichnet, dass** die Gitterzellen des Motivbilds und die Gitterzellen des Fokussierelementrasters zumindest lokal jeweils ein zweidimensionales Bravais-Gitter bilden, und/oder dass die lateralen Abmessungen der Gitterzellen des Motivbilds und/ oder der Gitterzellen des Fokussierelementrasters unterhalb von etwa 100 $\mu$m, bevorzugt zwischen etwa 5 $\mu$m und etwa 50 $\mu$m, besonders bevorzugt zwischen etwa 10 $\mu$m und etwa 35 $\mu$m liegen.

4. Sicherheitselement nach wenigstens einem der Ansprüche 1 bis 3, **dadurch gekennzeichnet, dass** die Mikrofokussierelemente durch nichtzylindrische Mikrolinsen oder Mikrohohlspiegel, insbesondere durch Mikrolinsen oder Mikrohohlspiegel mit einer kreisförmigen oder polygonal begrenzten Basisfläche gebildet sind, oder dass die Mikrofokussierelemente durch lang gestreckte Zylinderlinsen oder Zylinderhohlspiegel gebildet sind, deren Ausdehnung in Längsrichtung mehr als 250 $\mu$m, bevorzugt mehr als 300 $\mu$m, besonders bevorzugt mehr als 500 $\mu$m und insbesondere mehr als 1 mm beträgt.

5. Sicherheitselement für Sicherheitspapiere, Wertdokumente und dergleichen, mit einer mikrooptischen Vergrößerungsanordnung vom Moirétyp zur nicht-überlappenden Darstellung eines vorgegebenen Moiré-Bildes mit mehreren Moiré-Bildelementen, mit

- einem Motivbild, das eine periodische oder zumindest lokal periodische Anordnung einer Mehrzahl von Gitterzellen mit Mikromotivelementen enthält, wobei jedes Mikromotivelement einem der Moire-Bildelemente entspricht,
- einem zum Motivbild beabstandet angeordneten Fokussierelementraster zur Moiré-vergrößerten Betrachtung des Motivbilds, das eine periodische oder zumindest lokal periodische Anordnung einer Mehrzahl von Gitterzellen mit jeweils einem Mikrofokussierelement enthält,

wobei das Motivbild in Flächenbereiche unterteilt ist, die jeweils einem der Moiré-Bildelemente zugeordnet sind und in Position und Größe dem zugeordneten Moiré-Bildelement entsprechen, und wobei die einem Moire-Bildelement entsprechenden Mikromotivelemente jeweils in dem Flächenbereich des Motivbilds wiederholt angeordnet sind, der diesem Moiré-Bildelement zugeordnet ist.

6. Sicherheitselement nach wenigstens einem der Ansprüche 1 bis 5, **dadurch gekennzeichnet, dass** das Sicherheitselement eine opake Abdeckschicht zur bereichsweisen Abdeckung der Vergrößerungsanordnung vom Moirétyp aufweist.

7. Verfahren zum Herstellen eines Sicherheitselements mit einer mikrooptischen Vergrößerungsanordnung vom Moirétyp zur nicht-überlappenden Darstellung eines vorgegebenen Moire-Bildes mit einem oder mehreren Moire-Bildelementen, bei dem

- in einer Motivebene ein Motivbild mit einer periodischen oder zumindest lokal periodischen Anordnung einer Mehrzahl von Gitterzellen mit Mikromotivbildteilen erzeugt wird,
- ein Fokussierelementraster zur Moiré-vergrößerten Betrachtung des Motivbilds mit einer periodischen oder zumindest lokal periodischen Anordnung einer Mehrzahl von Gitterzellen mit jeweils einem Mikrofokussierelement erzeugt und zum Motivbild beabstandet angeordnet wird,

wobei die Mikromotivbildteile so ausgebildet werden, dass die Mikromotivbildteile mehrerer beabstandeter Gitterzellen des Motivbilds zusammengenommen jeweils ein Mikromotivelement bilden, das einem der Moiré Bildelemente des vergrößerten Moiré-Bildes entspricht und wobei die Ausdehnung des Mikromotivelements größer als eine Gitterzelle des Motivbilds ist.

8. Verfahren nach Anspruch 7, **dadurch gekennzeichnet, dass**

a) ein gewünschtes, bei Betrachtung zu sehendes Moiré-Bild mit einem oder mehreren Moire-Bildelementen als Sollmotiv festgelegt wird,
b) eine periodische oder zumindest lokal periodische Anordnung von Mikrofokussierelementen als Fokussierelementraster festgelegt wird,

c) eine gewünschte Vergrößerung und eine gewünschte Bewegung des zu sehenden Moiré-Bilds beim seitlichen Kippen und beim vor-/rückwärtigen Kippen der Vergrößerungsanordnung festgelegt wird,

d) aus dem festgelegten Vergrößerungs- und Bewegungsverhalten, dem Fokussierelementraster und dem Sollmotiv das in die Motivebene einzubringende Mikromotivelement und das Motivraster berechnet wird,

e) geprüft wird, ob eine mit der Symmetrie des Motivrasters wiederholte Anordnung der Mikromotivelemente zu Überlappung führt, und falls dies der Fall ist,

f) gleichartige Motiv-Teilmengen der in Schritt e) erzeugten Mikromotivelement-Anordnung ermittelt werden, in denen die Mikromotivelemente überlappungsfrei wiederholt angeordnet sind,

g) gleichartige, den Motiv-Teilmengen entsprechende Fokussierelement-Teilmengen des Fokussierelementrasters bestimmt und der jeweiligen Motiv-Teilmenge zugeordnet werden,

h) für jede Fokussierelement-Teilmenge der Schnitt des entsprechenden Fokussierelement-Teilrasters mit der zugehörigen Motiv-Teilmenge bestimmt wird, und

i) die entstehenden Schnitte entsprechend der relativen Position der Fokussierelement-Teilmenge im Fokussierelementraster zu dem in der Motivebene anzuordnenden Motivbild zusammengesetzt werden.

9. Verfahren nach Anspruch 7 oder 8, **dadurch gekennzeichnet, dass**

a) ein gewünschtes, bei Betrachtung zu sehendes Moiré-Bild mit einem oder mehreren Moiré-Bildelementen als Sollmotiv festgelegt wird,

b) eine periodische oder zumindest lokal periodische Anordnung von Mikrofokussierelementen als Fokussierelementraster festgelegt wird,

c) eine gewünschte Vergrößerung und eine gewünschte Bewegung des zu sehenden Moire-Bilds beim seitlichen Kippen und beim vor-/rückwärtigen Kippen der Vergrößerungsanordnung festgelegt wird,

d) aus dem festgelegten Vergrößerungs- und Bewegungsverhalten, dem Fokussierelementraster und dem Sollmotiv das in die Motivebene einzubringende Mikromotivelement und das Motivraster berechnet wird,

e) geprüft wird, ob eine mit der Symmetrie des Motivrasters wiederholte Anordnung der Mikromotivelemente zu Überlappung führt, und falls dies der Fall ist,

f') ein Übergitterraster des Motivrasters ermittelt wird, in dem die Mikromotivelemente überlappungsfrei wiederholt angeordnet werden können,

g') ein dem Motiv-Übergitterraster entsprechendes Übergitterraster des Fokussierelementrasters bestimmt wird und das Fokussierelementraster in Teilraster mit der Symmetrie des Fokussierelement-Übergitterrasters zerlegt wird,

h') für jedes Fokussierelement-Teilraster der Schnitt des Teilrasters mit einer überlappungsfreien Anordnung der Mikromotivelemente bestimmt wird, und

i') die entstehenden Schnitte entsprechend der relativen Position des jeweiligen Teilrasters im Fokussierelement-Übergitterraster zu dem in der Motivebene anzuordnenden Motivbild zusammengesetzt werden.

10. Verfahren nach Anspruch 9, **dadurch gekennzeichnet, dass** nach Schritt g') in einem Schritt

g") für jedes Fokussierelement-Teilraster das entsprechende Motiv-Teilraster ermittelt und der auf die Motiv-Übergitterzelle bezogene Versatz dieses Motiv-Teilrasters bestimmt wird, und in Schritt

h') für jedes Fokussierelement-Teilraster die in Schritt f') ermittelte überlappungsfreie Anordnung der Mikromotivelemente um den in Schritt g") bestimmten Versatz des zugehörigen Motiv-Teilrasters verschoben und der Schnitt des Fokussierelement-Teilrasters mit der verschobenen überlappungsfreien Anordnung der Mikromotivelemente bestimmt wird.

11. Verfahren nach wenigstens einem der Ansprüche 8 bis 10, **dadurch gekennzeichnet, dass** das Fokussierelementraster in Schritt b) in Form eines zweidimensionalen Bravais-Gitters festgelegt wird, dessen Gitterzellen durch Vektoren $\vec{w}_1$ und $\vec{w}_2$ gegeben sind.

12. Verfahren nach Anspruch 11, **dadurch gekennzeichnet, dass** das gewünschte Vergrößerungs- und Bewegungsverhalten in Schritt c) in Form der Matrixelemente einer Transformationsmatrix $\vec{A}$ vorgegeben wird.

13. Verfahren nach Anspruch 12, **dadurch gekennzeichnet, dass** das in die Motivebene einzubringende Mikromotivelement und das Motivraster in Schritt d) unter Verwendung der Beziehungen

$$\vec{U} = (\vec{I} - \tilde{A}^{-1}) \cdot \vec{W}$$

und

$$\vec{r} = \tilde{A}^{-1} \cdot \vec{R} + \vec{r}_0$$

berechnet werden, wobei $\vec{R} = \begin{pmatrix} X \\ Y \end{pmatrix}$ einen Bildpunkt des gewünschten Moiré-Bilds, $\vec{r} = \begin{pmatrix} x \\ y \end{pmatrix}$ einen Bildpunkt des Motivbilds, $\vec{r}_0 = \begin{pmatrix} x_0 \\ y_0 \end{pmatrix}$ eine Verschiebung zwischen dem Fokussierelementraster und dem Motivbild darstellt,

und die Matrizen $\tilde{A}$, $\tilde{W}$ und die Motivgittermatrix $\vec{U}$ durch $\tilde{A} = \begin{pmatrix} a_{11} & a_{12} \\ a_{21} & a_{22} \end{pmatrix}$, $\tilde{W} = \begin{pmatrix} w_{11} & w_{12} \\ w_{21} & w_{22} \end{pmatrix}$ bzw.

$\vec{U} = \begin{pmatrix} u_{11} & u_{12} \\ u_{21} & u_{22} \end{pmatrix}$ gegeben sind, wobei $u_{1i}$, $u_{2i}$ bzw. $w_{1i}$, $w_{2i}$ die Komponenten der Gitterzellenvektoren $\vec{u}_i$, und $\vec{w}_i$, mit i=1,2 darstellen.

**14.** Verfahren nach wenigstens einem der Ansprüche 9 bis 13, **dadurch gekennzeichnet, dass** in Schritt f') ein Motiv-Übergitterraster ausgewählt wird, das aus n x m Gitterzellen des Motivrasters besteht, wobei für n und m vorzugsweise die kleinsten Werte gewählt werden, die eine überlappungsfreie Anordnung der Mikromotivelemente erlauben.

**15.** Verfahren nach Anspruch 14, **dadurch gekennzeichnet, dass** das Fokussierelementraster in Schritt g') in n x m Teilraster zerlegt wird.

**16.** Verfahren nach Anspruch 10 und Anspruch 15, **dadurch gekennzeichnet, dass** das Motivraster in Schritt g") in n x m Motiv-Teilraster zerlegt wird und für jedes Motiv-Teilraster der auf die Motiv-Übergitterzelle bezogene Versatz $\vec{v}_j$ mit j =1, ... n*m, des Motiv-Teilrasters bestimmt wird, insbesondere, dass in Schritt h') für jedes Fokussierelement-Teilraster die in Schritt f') ermittelte überlappungsfreie Anordnung der Mikromotivelemente um den Versatz $\vec{v}_j$ des zugehörigen Motiv-Teilrasters verschoben und der Schnitt des Fokussierelement-Teilrasters mit der verschobenen überlappungsfreien Anordnung der Mikromotivelemente bestimmt wird.

**17.** Verfahren zum Herstellen eines Sicherheitselements mit einer mikrooptischen Vergrößerungsanordnung vom Moirétyp zur nicht-überlappenden Darstellung eines vorgegebenen Moiré-Bildes mit mehreren Moiré-Bildelementen, bei dem

- ein Motivbild mit einer periodischen oder zumindest lokal periodischen Anordnung einer Mehrzahl von Gitterzellen mit Mikromotivelementen erzeugt wird, wobei jedes Mikromotivelement einem der Moiré-Bildelemente entspricht,
- ein Fokussierelementraster zur Moiré-vergrößerten Betrachtung des Motivbilds mit einer periodischen oder zumindest lokal periodischen Anordnung einer Mehrzahl von Gitterzellen mit jeweils einem Mikrofokussierelement erzeugt und zum Motivbild beabstandet angeordnet wird,

wobei das Motivbild in Flächenbereiche unterteilt wird, die jeweils einem der Moire-Bildelemente zugeordnet sind und in Position und Größe dem zugeordneten Moire-Bildelement entsprechen, und wobei die einem Moire-Bildelement entsprechenden Mikromotivelemente jeweils in dem Flächenbereich des Motivbilds wiederholt angeordnet werden, der diesem Moire-Bildelement zugeordnet ist.

**18.** Verfahren nach wenigstens einem der Ansprüche 8 bis 17, **dadurch gekennzeichnet, dass** die Motivraster-Gitterzellen und die Fokussierelementraster-Gitterzellen durch Vektoren $\vec{u}_1$, und $\vec{u}_2$, bzw. $\vec{w}_1$ und $\vec{w}_2$ beschrieben und diese ortsabhängig moduliert werden, wobei sich die lokalen Periodenparameter $|\vec{u}_1|$, $|\vec{u}_{2|}$, $\angle (\vec{u}_1, \vec{u}_2)$ bzw. $|\vec{w}_1|, |\vec{w}_2|$, $\angle (\vec{w}_1, \vec{w}_2)$ im Verhältnis zur Periodizitätslänge nur langsam ändern.

**19.** Verfahren nach wenigstens einem der Ansprüche 7 bis 18, **dadurch gekennzeichnet, dass** das Motivbild auf ein Substrat gedruckt wird, wobei die aus den Mikromotivbildteilen gebildeten Mikromotivelemente Mikrozeichen oder Mikromuster darstellen.

**20.** Sicherheitspapier für die Herstellung von Sicherheits- oder Wertdokumenten, wie Banknoten, Schecks, Ausweiskarten, Urkunden oder dergleichen, das mit einem Sicherheitselement nach wenigstens einem der Ansprüche 1 bis 19 ausgestattet ist, wobei das Sicherheitspapier insbesondere ein Trägersubstrat aus Papier oder Kunststoff umfasst.

**21.** Datenträger, insbesondere Markenartikel, Wertdokument, dekorativer Artikel oder dergleichen, mit einem Sicherheitselement nach einem der Ansprüche 1 bis 19, wobei das Sicherheitselement insbesondere in einem Fensterbereich des Datenträgers angeordnet ist.

**Claims**

**1.** A security element for security papers, value documents and the like, having a microoptical moire-type magnification arrangement for the non-overlapping depiction of a specified moire image having one or more moire image elements, having

- a motif image that includes a periodic or at least locally periodic arrangement of a plurality of lattice cells having micromotif image portions,
- for the moire-magnified viewing of the motif image, a focusing element grid that is arranged spaced apart from the motif image and that includes a periodic or at least locally periodic arrangement of a plurality of lattice cells having one microfocusing element each,

wherein, taken together, the micromotif image portions of multiple spaced-apart lattice cells of the motif image each form one micromotif element that corresponds to one of the moire image elements of the magnified moiré image and wherein the dimension of the micromotif element is larger than one lattice cell of the motif image.

**2.** The security element according to claim 1, **characterized in that** both the lattice cells of the motif image and the lattice cells of the focusing element grid are arranged periodically, or that, locally, both the lattice cells of the motif image and the lattice cells of the focusing element grid are arranged periodically, the local period parameters changing only slowly in relation to the periodicity length.

**3.** The security element according to claim 1 or 2, **characterized in that** the lattice cells of the motif image and the lattice cells of the focusing element grid form, at least locally, one two-dimensional Bravais lattice each, and/ or that the lateral dimensions of the lattice cells of the motif image and/ or of the lattice cells of the focusing element grid are below about 100 $\mu$m, preferably between about 5 $\mu$m and about 50 $\mu$m, particularly preferably between about 10 $\mu$m and about 35 $\mu$m.

**4.** The security element according to at least one of claims 1 to 3, **characterized in that** the microfocusing elements are formed by non-cylindrical microlenses or concave microreflectors, especially by microlenses or concave microreflectors having a circular or polygonally delimited base area, or that the microfocusing elements are formed by elongated cylindrical lenses or concave cylindrical reflectors whose dimension in the longitudinal direction measures more than 250 $\mu$m, preferably more than 300 $\mu$m, particularly preferably more than 500 $\mu$m and especially more than 1 mm.

**5.** A security element for security papers, value documents and the like, having a microoptical moire-type magnification arrangement for the non-overlapping depiction of a specified moire image having multiple moire image elements, having

- a motif image that includes a periodic or at least locally periodic arrangement of a plurality of lattice cells having micromotif elements, each micromotif element corresponding to one of the moire image elements,

- for the moire-magnified viewing of the motif image, a focusing element grid that is arranged spaced apart from the motif image and that includes a periodic or at least locally periodic arrangement of a plurality of lattice cells having one microfocusing element each,

wherein the motif image is broken down into areal regions that are each allocated to one of the moire image elements and correspond in position and size to the allocated moire image element, and wherein the micromotif elements corresponding to a moire image element are each arranged repeatedly in the areal region of the motif image that is allocated to this moire image element.

6.  The security element according to at least one of claims 1 to 5, **characterized in that** the security element exhibits an opaque cover layer to cover the moire-type magnification arrangement in some regions.

7.  A method for manufacturing a security element having a microoptical moire-type magnification arrangement for the non-overlapping depiction of a specified moire image having one or more moire image elements, in which

   - a motif image having a periodic or at least locally periodic arrangement of a plurality of lattice cells having micromotif image portions is produced in a motif plane
   - a focusing element grid for the moire-magnified viewing of the motif image, having a periodic or at least locally periodic arrangement of a plurality of lattice cells having one microfocusing element each, is produced and arranged spaced apart from the motif image,

   wherein, taken together, the micromotif image portions are developed such that the micromotif image portions of multiple spaced-apart lattice cells of the motif image each form one micromotif element that corresponds to one of the moire image elements of the magnified moire image and wherein the dimension of the micromotif element is larger than one lattice cell of the motif image.

8.  The method according to claim 7, **characterized in that**

   a) a desired moire image that is visible when viewed, having one or more moire image elements, is defined as the target motif,
   b) a periodic or at least locally periodic arrangement of microfocusing elements is defined as the focusing element grid,
   c) a desired magnification and a desired movement of the visible moire image when the magnification arrangement is tilted laterally and when tilted forward/backward is defined,
   d) the micromotif element to be introduced into the motif plane and the motif grid is calculated from the defined magnification and movement behavior, the focusing element grid and the target motif,
   e) it is checked whether an arrangement of the micromotif elements repeated with the symmetry of the motif grid leads to overlapping, and if this is the case,
   f) uniform motif subsets of the micromotif element arrangement produced in step e) are identified in which the micromotif elements are arranged repeatedly, free of overlaps,
   g) uniform focusing element subsets of the focusing element grid that correspond to the motif subsets are determined and allocated to the respective motif subset,
   h) for each focusing element subset, the intersection of the corresponding focusing element subgrid with the associated motif subset is determined, and
   i) the resulting intersections are composed, in accordance with the relative position of the focusing element subset in the focusing element grid, to form the motif image to be arranged in the motif plane.

9.  The method according to claim 7 or 8, **characterized in that**

   a) a desired moire image that is visible when viewed, having one or more moire image elements, is defined as the target motif,
   b) a periodic or at least locally periodic arrangement of microfocusing elements is defined as the focusing element grid,
   c) a desired magnification and a desired movement of the visible moiré image when the magnification arrangement is tilted laterally and when tilted forward/backward is defined,
   d) the micromotif element to be introduced into the motif plane and the motif grid is calculated from the defined magnification and movement behavior, the focusing element grid and the target motif,
   e) it is checked whether an arrangement of the micromotif elements repeated with the symmetry of the motif grid leads to overlapping, and if this is the case,

f') a superlattice grid of the motif grid is identified in which the micromotif elements can be arranged repeatedly, free of overlaps,

g') a superlattice grid of the focusing element grid that corresponds to the motif superlattice grid is determined and the focusing element grid is broken down into subgrids having the symmetry of the focusing element superlattice grid,

h') for each focusing element subgrid, the intersection of the subgrid with an overlap-free arrangement of the micromotif elements is determined, and

i') the resulting intersections are composed in accordance with the relative position of the respective subgrid in the focusing element superlattice grid to form the motif image to be arranged in the motif plane.

10. The method according to claim 9, **characterized in that**, after step g'), in a step

g") for each focusing element subgrid, the corresponding motif subgrid is identified and the offset of this motif subgrid with respect to the motif superlattice cell is determined, and in step

h') for each focusing element subgrid, the overlap-free arrangement of the micromotif elements identified in step f') is displaced by the offset of the associated motif subgrid determined in step g"), and the intersection of the focusing element subgrid with the displaced overlap-free arrangement of the micromotif elements is determined.

11. The method according to at least one of claims 8 to 10, **characterized in that** the focusing element grid in step b) is defined in the form of a two-dimensional Bravais lattice whose lattice cells are given by vectors $\vec{w_1}$ and $\vec{w_2}$.

12. The method according to claim 11, **characterized in that** the desired magnification and movement behavior in step c) is specified in the form of the matrix elements of a transformation matrix $\vec{A}$.

13. The method according to claim 12, **characterized in that**, in step d), the micromotif element to be introduced into the motif plane and the motif grid are calculated using the relationships

$$\vec{U} = (\vec{I} - \vec{A}^{-1}) \cdot \vec{W}$$

and

$$\vec{r} = \vec{A}^{-1} \cdot \vec{R} + \vec{r}_0$$

$\vec{R} = \begin{pmatrix} X \\ Y \end{pmatrix}$ representing an image point of the desired moire image, $\vec{r} = \begin{pmatrix} x \\ y \end{pmatrix}$ an image point of the motif image,

$\vec{r}_0 = \begin{pmatrix} x_0 \\ y_0 \end{pmatrix}$ a displacement between the focusing element grid and the motif image, and the matrices $\vec{A}, \vec{W}$ and

the motif grating matrix $\vec{U}$ being given by $\vec{A} = \begin{pmatrix} a_{11} & a_{12} \\ a_{21} & a_{22} \end{pmatrix}$, $\vec{W} = \begin{pmatrix} w_{11} & w_{12} \\ w_{21} & w_{22} \end{pmatrix}$ and $\vec{U} = \begin{pmatrix} u_{11} & u_{12} \\ u_{21} & u_{22} \end{pmatrix}$, with

$u_{1i}, u_{2i}$ and $w_{1i}, w_{2i}$ representing the components of the lattice cell vectors $\vec{u_i}$ and $\vec{w_i}$, where i=1,2.

14. The method according to at least one of claims 9 to 13, **characterized in that**, in step f'), a motif superlattice grid is selected that consists of n x m lattice cells of the motif grid, wherein, for n and m, preferably the smallest values are chosen that permit an overlap-free arrangement of the micromotif elements.

**15.** The method according to claim 14, **characterized in that**, in step g'), the focusing element grid is broken down into n x m subgrids.

**16.** The method according to claim 10 and claim 15, **characterized in that**, in step g"), the motif grid is broken down into n x m motif subgrids and, for each motif subgrid, the offset $\vec{v}_j$ of the motif subgrid with respect to the motif superlattice cell is determined, where j =1, ... n*m, especially that in step h'), for each focusing element subgrid, the overlap-free arrangement of the micromotif elements identified in step f') is displaced by the offset $\vec{v}_j$ of the associated motif subgrid, and the intersection of the focusing element subgrid with the displaced overlap-free arrangement of the micromotif elements is determined.

**17.** A method for manufacturing a security element having a microoptical moire-type magnification arrangement for the non-overlapping depiction of a specified moire image having multiple moire image elements, in which

- a motif image having a periodic or at least locally periodic arrangement of a plurality of lattice cells having micromotif elements is produced, each micromotif element corresponding to one of the moire image elements,
- a focusing element grid for the moire-magnified viewing of the motif image, having a periodic or at least locally periodic arrangement of a plurality of lattice cells having one microfocusing element each, is produced and arranged spaced apart from the motif image,

wherein the motif image is broken down into areal regions that are each allocated to one of the moiré image elements and correspond in position and size to the allocated moire image element, and wherein the micromotif elements corresponding to a moire image element are each arranged repeatedly in the areal region of the motif image that is allocated to this moire image element.

**18.** The method according to at least one of claims 8 to 17, **characterized in that** the motif grid lattice cells and the focusing element grid lattice cells are described by vectors $\vec{u}_1$ and $\vec{u}_2$ or $\vec{w}_1$ and $\vec{w}_2$, and these are modulated location dependently, the local period parameters $|\vec{u}_1|, |\vec{u}_2|, \angle(\vec{u}_1, \vec{u}_2)$ and $|\vec{w}_1|, |\vec{w}_2|, \angle(\vec{w}_1, \vec{w}_2)$ changing only slowly in relation to the periodicity length.

**19.** The method according to at least one of claims 7 to 18, **characterized in that** the motif image is printed on a substrate, the micromotif elements formed from the micromotif image portions constituting microcharacters or micropatterns.

**20.** A security paper for manufacturing security or value documents, such as banknotes, checks, identification cards, certificates or the like, that are furnished with a security element according to at least one of claims 1 to 19, wherein the security paper especially comprises a carrier substrate composed of paper or plastic.

**21.** A data carrier, especially a branded article, value document, decorative article or the like, having a security element according to one of claims 1 to 19, wherein the security element is especially arranged in a window region of the data carrier.

**Revendications**

**1.** Elément de sécurité pour papiers de sécurité, documents de valeur et analogues, comportant un dispositif d'agrandissement micro-optique du type moiré, pour une représentation sans chevauchement d'une image moirée prédéfinie, comportant un ou plusieurs pixels moirés, comportant :

- une image à motifs, qui contient un arrangement périodique ou au moins localement périodique d'un grand nombre de cellules de réseau comportant des parties d'image à micromotifs,
- une trame d'éléments de focalisation, disposée à distance de l'image à motifs, pour permettre l'observation, avec un agrandissement par effet de moiré, de l'image à motifs, qui contient un arrangement périodique ou au moins localement périodique d'un grand nombre de cellules de réseau ayant chacune un élément de microfocalisation,

les parties d'image à micromotifs de plusieurs cellules de réseau à distance de l'image à motifs formant, prises ensemble, un élément de micromotif, qui correspond à l'un des éléments de l'image moirée agrandie, l'extension de l'élément de micromotif étant supérieure à celle d'une cellule de réseau de l'image à motifs.

**2.** Elément de sécurité selon la revendication 1, **caractérisé en ce que** tant les cellules de réseau de l'image à motifs que les cellules de réseau de la trame des éléments de focalisation ont une disposition périodique, ou que tant les cellules de réseau de l'image à motifs que les cellules de réseau de la trame d'éléments de focalisation présentent une disposition localement périodique, les paramètres locaux de périodicité ne variant que lentement par rapport à la longueur de la périodicité.

**3.** Elément de sécurité selon la revendication 1 ou 2, **caractérisé en ce que** les cellules de réseau de l'image à motifs et les cellules de réseau de la trame d'éléments de focalisation forment chacune au moins localement un réseau de Bravais bidimensionnel, et/ou que les dimensions latérales des cellules de réseau de l'image à motifs et/ou des cellules de réseau de la trame d'éléments de focalisation sont inférieures à environ 100 μm, de préférence comprises entre 5 μm et environ 50 μm, d'une manière particulièrement préférée entre environ 10 μm et environ 35 μm.

**4.** Elément de sécurité selon au moins l'une des revendications 1 à 3, **caractérisé en ce que** les micro-éléments de focalisation sont formés de microlentilles ou de micromiroirs concaves non cylindriques, en particulier de microlentilles ou de micromiroirs concaves ayant une surface de base délimitée par un périmètre circulaire ou polygonal, ou **en ce que** les micro-éléments de focalisation sont formés de lentilles cylindriques ou de miroirs concaves cylindriques s'étendant longitudinalement, leur extension dans la direction longitudinale étant supérieure à 250 μm, de préférence supérieure à 300 μm, d'une manière particulièrement préférée supérieure à 500 μm et en particulier supérieure à 1 mm.

**5.** Elément de sécurité pour papiers dé sécurité, documents de valeur et analogues, comportant un arrangement à agrandissement micro-optique du type moiré, pour une représentation sans chevauchement d'une image moirée prédéfinie comportant plusieurs pixels moirés comportant

  - une image à motifs, qui contient un arrangement périodique ou au moins localement périodique d'un grand nombre de cellules de réseau de micro-éléments à motifs, chaque micro-élément à motifs correspondant à l'un des éléments d'image moirée,
  - une trame d'éléments de focalisation, disposée à distance de l'image à motifs, pour l'observation, avec agrandissement par effet de moiré, de l'image à motifs, qui contient un arrangement périodique ou au moins localement périodique d'un grand nombre de cellules de réseau, chacune avec un micro-élément de focalisation,

  l'image à motifs étant subdivisée en zones superficielles, dont chacune est affectée à l'un des pixels moirés, et qui de par leur position et leur taille correspondent au pixel moiré qui leur est affecté, les micro-éléments à motifs correspondant à un pixel moiré étant chacun disposé d'une manière répétitive dans la zone superficielle de l'image à motifs qui est affectée à ce pixel moiré.

**6.** Elément de sécurité selon au moins l'une des revendications 1 à 5, **caractérisé en ce que** l'élément de sécurité comprend une couche de recouvrement opaque, destinée à recouvrir par zones l'arrangement d'agrandissement du type moiré.

**7.** Procédé de fabrication d'un élément de sécurité comportant un arrangement d'agrandissement micro-optique du type moiré, pour la représentation sans chevauchement d'une image moirée prédéfinie, comportant un ou plusieurs pixels moirés, dans lequel

  - dans un plan des motifs, une image à motifs est produite, avec un arrangement périodique ou au moins localement périodique d'un grand nombre de cellules de réseau comportant des parties de micro-images à motifs,
  - une trame d'éléments de focalisation, pour l'observation, avec agrandissement par effet de moiré, de l'image à motifs comportant un arrangement périodique ou au moins localement périodique d'un grand nombre de cellules de réseau, chacune ayant un micro-élément de focalisation, et étant disposée à distance de l'image à motifs,

  les parties de micro-images à motifs étant configurées de telle sorte que les parties de micro-images à motifs de plusieurs cellules de réseau à distance de l'image à motifs forment, ensemble, un micro-élément à motifs, qui correspond à l'un des pixels moirés de l'image moirée agrandie, l'extension du micro-élément à motifs étant supérieure à celle d'une cellule de réseau de l'image à motifs.

**8.** Procédé selon la revendication 7, **caractérisé en ce que**

a) on définit en tant que motif de consigne une image moirée souhaitée, destinée à être vue lors de son observation, comportant un ou plusieurs pixels moirés,

b) on définit un arrangement périodique ou au moins localement périodique de micro-éléments de focalisation comme étant une trame d'éléments de focalisation,

c) on définit un agrandissement souhaité et un déplacement souhaité de l'image moirée à observer, lors du basculement latéral et lors du basculement vers l'avant et vers l'arrière de l'arrangement avec agrandissement,

d) à partir du comportement ainsi défini en agrandissement et déplacement, de la trame d'éléments de focalisation et du motif de consigne, on calcule le micro-élément à motifs devant être incorporé dans le plan des motifs, ainsi que la trame des motifs,

e) on vérifie si un arrangement répété, ayant la symétrie de la trame des motifs, des micro-éléments à motifs conduit à un chevauchement et, si c'est le cas,

f) on détermine les quantités partielles équivalentes de motifs de l'arrangement de micro-éléments à motifs produits dans l'étape e), dans lesquelles les micro-éléments à motifs sont disposés d'une manière répétitive sans chevauchement,

g) on détermine les quantités partielles équivalentes de la trame d'éléments de focalisation, des éléments de focalisation correspondant aux quantités partielles de motifs, et on les affecte à la quantité partielle correspondante de motifs,

h) pour chaque quantité partielle d'éléments de focalisation, on détermine l'intersection entre la trame partielle correspondante des éléments de focalisation et la quantité partielle de motifs qui lui est affectée, et

i) on combine les intersections ainsi produites, correspondant à la position relative de la quantité partielle d'éléments de focalisation dans la trame d'éléments de focalisation, à l'image à motifs devant être disposée dans le plan des motifs.

**9.** Procédé selon la revendication 7 ou 8, **caractérisé en ce que**

a) on définit en tant que motif de consigne une image moirée souhaitée, destinée à être vue lors de son observation, comportant un ou plusieurs pixels moirés,

b) on définit un arrangement périodique ou au moins localement périodique de micro-éléments de focalisation comme étant une trame d'éléments de focalisation,

c) on définit un agrandissement souhaité et un déplacement souhaité de l'image moirée à observer, lors du basculement latéral et lors du basculement vers l'avant et vers l'arrière de l'arrangement avec agrandissement,

d) à partir du comportement ainsi défini en agrandissement et déplacement, de la trame d'éléments de focalisation et du motif de consigne, on calcule le micro-élément à motifs devant être incorporé dans le plan des motifs, ainsi que la trame des motifs,

e) on vérifie si un arrangement répété, ayant la symétrie de la trame des motifs, des micro-éléments à motifs conduit à un chevauchement et, si c'est le cas,

f) on détermine une trame à surréseau de la trame des motifs, par le fait que les micro-éléments à motifs peuvent être disposés d'une manière répétitive sans chevauchement,

g') on détermine une trame à surréseau, correspondant à la trame à surréseau des motifs, de la trame des éléments de focalisation, et on décompose la trame des éléments de focalisation en des trames partielles présentant la symétrie de la trame à surréseau des éléments de focalisation,

h') pour chaque trame partielle des éléments de focalisation, on détermine l'intersection de la trame partielle avec un arrangement sans chevauchement des micro-éléments à motifs, et

i') on combine les intersections ainsi formées, en fonction de la position relative de chaque trame partielle dans la trame à surréseau des éléments de focalisation, pour donner l'image à motifs devant être disposée dans le plan de motifs.

**10.** Procédé selon la revendication 9, **caractérisé en ce que**, après l'étape g'), dans une étape

g"), on détermine pour chaque trame partielle des éléments de focalisation la trame partielle correspondante des motifs, et on détermine le décalage, rapporté à la cellule du surréseau à motifs, de cette trame partielle des motifs, et, dans l'étape

h'), pour chaque trame partielle des éléments de focalisation, on déplace l'arrangement sans chevauchement déterminé dans l'étape f) des micro-éléments à motifs, du décalage déterminé dans l'étape g") de la trame partielle des motifs correspondante, et on détermine l'intersection de la trame partielle des éléments de focalisation avec l'arrangement sans chevauchement ainsi déplacé des micro-éléments à motifs.

**11.** Procédé selon au moins l'une des revendications 8 à 10, **caractérisé en ce que** la trame des éléments de focalisation dans l'étape b) est définie sous forme d'un réseau de Bravais bidimensionnel, dont les cellules de réseau sont définies par les vecteurs $\overline{w}_1$ et $\overline{w}_2$.

**12.** Procédé selon la revendication 11, **caractérisé en ce que** le comportement souhaité en agrandissement et déplacement dans l'étape c) est prédéfini sous forme des éléments d'une matrice de transformation $\overline{A}$.

**13.** Procédé selon la revendication 12, **caractérisé en ce que** le micro-élément à motifs devant être introduit dans le plan de motifs et la trame des motifs de l'étape d) sont calculés par utilisation des relations

$$\vec{U} = (\vec{I} - \tilde{A}^{-1}) \cdot \vec{W}$$

et

$$\vec{r} = \tilde{A}^{-1} \cdot \vec{R} + \vec{r}_0$$

dans laquelle

$$\vec{R} = \begin{pmatrix} X \\ Y \end{pmatrix}$$

représente un point image de l'image moirée souhaitée,

$$\vec{r} = \begin{pmatrix} x \\ y \end{pmatrix}$$

représente un point image de l'image à motifs,

$$\vec{r}_0 = \begin{pmatrix} x_0 \\ y_0 \end{pmatrix}$$

représente un déplacement entre la trame des éléments de focalisation et l'image à motifs, et les matrices $\overline{A}$, $\overline{W}$ et la matrice du réseau à motifs $\overline{U}$ sont définies par

$$\tilde{A} = \begin{pmatrix} a_{11} & a_{12} \\ a_{21} & a_{22} \end{pmatrix}, \quad \vec{W} = \begin{pmatrix} w_{11} & w_{12} \\ w_{21} & w_{22} \end{pmatrix}$$

ou

$$\vec{U} = \begin{pmatrix} u_{11} & u_{12} \\ u_{21} & u_{22} \end{pmatrix}$$

$u_{1i}$, $u_{2i}$, et $w_{1i}$, $w_{2i}$ représentant les composantes des vecteurs des cellules de réseau $\overline{u}_i$ et $\overline{w}_i$, avec i = 1,2.

**14.** Procédé selon au moins l'une des revendications 9 à 13, **caractérisé en ce que**, dans l'étape f) on choisit une trame à surréseau de motifs qui est constituée de n x m cellules de réseau de la trame des motifs, auquel cas, pour n et m, on choisit de préférence les valeurs les plus petites qui autorisent un arrangement sans chevauchement des micro-éléments à motifs.

**15.** Procédé selon la revendication 14, **caractérisé en ce que** la trame des éléments de focalisation de l'étape g') est décomposée en n x m trames partielles.

**16.** Procédé selon la revendication 10 et la revendication 15, **caractérisé en ce que** la trame des motifs de l'étape g") est décomposée en n x m trames partielles de motifs, et que, pour chaque trame partielle de motifs, on détermine le décalage, rapporté à la cellule à surréseau de motifs, $\overline{v}_j$, avec j = 1, ... n*m, de la trame partielle des motifs, en particulier **en ce que** dans l'étape h'), pour chaque trame partielle des éléments de focalisation, on déplace du décalage $\overline{v}_j$ de la trame partielle des motifs correspondante l'arrangement sans chevauchement, déterminé dans l'étape f) des micro-éléments à motifs, et on détermine l'intersection de la trame partielle des éléments de focalisation avec l'arrangement sans chevauchement ainsi déplacé des micro-éléments à motifs.

**17.** Procédé de fabrication d'un élément de sécurité comportant un arrangement d'agrandissement micro-optique du type moiré, pour la représentation sans chevauchement d'une image moirée prédéfinie comportant plusieurs pixels moirés, dans lequel

- on produit une image à motifs comportant un arrangement périodique ou au moins localement périodique d'un grand nombre de cellules de réseau comportant des micro-éléments à motifs, chaque micro-élément à motifs correspondant à l'un des pixels moirés,
- on produit une trame d'éléments de focalisation pour l'observation avec agrandissement par effet de moiré de l'image à motifs comportant un arrangement périodique ou au moins localement périodique d'un grand nombre de cellules de réseau ayant chacun un micro-élément de focalisation, et on la dispose à distance de l'image à motifs,

l'image à motifs étant subdivisée en zones superficielles dont chacune est affectée à l'un des pixels moirés et, de par leur position et leur taille, correspondent au pixel moiré qui leur est affecté, les micro-éléments à motifs correspondant à un pixel moiré étant chacun disposé d'une manière répétitive dans la zone superficielle de l'image à motifs qui est affectée à cet élément d'image moirée.

**18.** Procédé selon au moins l'une des revendications 8 à 17, **caractérisé en ce que** les cellules de réseau de la trame des motifs et les cellules de réseau de la trame des éléments de focalisation sont décrites par les vecteurs respectivement $\overline{u}_1$ et $\overline{u}_2$, et $\overline{w}_1$ et $\overline{w}_2$, et sont modulées en fonction de leur position, les paramètres de périodicité locale

$$\left|\vec{u}_1\right|, \left|\vec{u}_2\right|, \angle(\vec{u}_1, \vec{u}_2)$$

et

$$\left|\vec{w}_1\right|, \left|\vec{w}_2\right|, \angle(\vec{w}_1, \vec{w}_2)$$

ne variant que lentement par rapport à la longueur de la périodicité.

**19.** Procédé selon au moins l'une des revendications 7 à 18, **caractérisé en ce que** l'image à motifs est imprimée sur un substrat, les micro-éléments à motifs formés à partir des parties de micro-images à motifs représentant des microcaractères ou des micromodèles.

**20.** Papier de sécurité pour la fabrication de documents de sécurité ou de valeur tels que des billets de banque, des chèques, des cartes d'identité, des certificats ou analogues, qui est muni d'un élément de sécurité selon au moins l'une des revendications 1 à 19, le papier de sécurité comportant en particulier un substrat support en papier ou plastique.

**21.** Support de données, en particulier articles de marque, documents de valeur, articles décoratifs ou analogues, comportant un élément de sécurité selon l'une des revendications 1 à 19, l'élément de sécurité étant disposé en particulier dans une zone formant fenêtre du support de données.

10

12

100

16

14

## Fig. 1

16

22

20

26

24    28    24    28'    24    28''

## Fig. 2

Fig. 3

Fig. 4a

Fig. 4b

Fig. 5a

Fig. 5b

Fig. 6a

Fig. 6b

Fig. 7a

Fig. 7b

42-1 —

80-1 —

66-1 —

**Fig. 8a**

42-2 —

80-2 —

66-2 —

**Fig. 8b**

42-3

80-3

66-3

## Fig. 8c

42-4

80-4

66-4

## Fig. 8d

80-1  80-2

80-4
80-3

82

72

Fig. 8e

84

86

Fig. 8f

90

92

## Fig. 9

94-i

$L_w$     $L_{w'}$

## Fig. 10

95

Fig. 11

96

98

Fig. 12

Fig. 13a

Fig. 13b

200

204-A    204-B    204-C

202-A    202-B    202-C

Fig. 14a

208

212    212

210

206-A    214    206-B    206-C

Fig. 14b

Fig. 15a

Fig. 15b

Fig. 15c

Fig. 15d

Fig. 15e

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0330733 A1
- EP 0064067 A1
- EP 0238043 A2
- US 5712731 A

- DE 102005062132
- EP 2006012374 W

### In der Beschreibung aufgeführte Nicht-Patentliteratur

- **M.C. Hutley ; R. Hunt ; R.F. Stevens ; P. Savander.** The moiré magnifier. *Pure Appl. Opt.,* 1994, vol. 3, 133-142